# EUROPEAN PATENT APPLICATION

(11) **EP 4 185 040 A1**
(43) Date of publication of application: **24.05.2023**
(21) Application number: 20948518.4
(22) Date of filing: 07.08.2020
(51) Int. Cl.: H04W 72/04

(54) **COMMUNICATION METHOD AND DEVICE**

(71) Applicant: Huawei Technologies Co., Ltd., Shenzhen, Guangdong 518129 (CN)
(72) Inventor: HUA, Meng, Shenzhen, Guangdong 518129 (CN); JIAO, Shurong, Shenzhen, Guangdong 518129 (CN)
(74) Representative: Goddar, Heinz J.
(86) International application number: PCT/CN2020/107995
(87) International publication number: WO 2022/027676

(57) **Abstract**

This application provides a communication method and a communication apparatus, and relates to the field of communication technologies, to improve uplink transmission performance of a terminal device. The method includes: when a network device configures a first frequency domain resource for a terminal device to perform uplink transmission, performing, by the terminal device, condition determining; and when a power headroom of the terminal device is less than a first threshold, or a ratio of an amount of uplink data to be sent by the terminal device to a TBS configured by the network device for the current uplink transmission is less than a second threshold, selecting, by the terminal device, a second frequency domain resource with fewer subcarriers to perform the uplink transmission. In this way, the terminal device performs the uplink transmission on the second frequency domain resource with fewer subcarriers, so that power allocated to each subcarrier can be increased, or a TBS size can be reduced, thereby improving uplink transmission performance of the terminal device.

## Description

### TECHNICAL FIELD

This application relates to the field of communication technologies, and in particular, to a communication method and a communication apparatus.

### BACKGROUND

When a network device configures an uplink transmission resource for a terminal device, a frequency domain resource in the configured uplink transmission resource may be improper. Consequently, when the terminal device performs uplink transmission based on the uplink transmission resource configured by the network device for the terminal device, a maximum transmit power of the terminal device cannot meet an uplink transmission requirement, or utilization of the frequency domain resource configured by the network device for the terminal device is relatively low, resulting in relatively poor uplink transmission performance of the terminal device.

### SUMMARY

This application provides a communication method and a communication apparatus, to improve uplink transmission performance of a terminal device.

To achieve the foregoing objective, the following technical solutions are used in this application.

According to a first aspect, a communication method is provided, including: receiving, by a terminal device, first indication information from a network device, where the first indication information indicates a first frequency domain resource to be used by the terminal device for uplink transmission; and
performing, by the terminal device, the uplink transmission based on a second frequency domain resource when a first preset condition is met, where a quantity of subcarriers of the second frequency domain resource is less than a quantity of subcarriers of the first frequency domain resource, and the first preset condition includes at least one of the following: a power headroom (power headroom, PH) of the terminal device is less than a first threshold, and a ratio of an amount of uplink data to be sent by the terminal device to a transport block size (transport block size, TBS) configured by the network device for the uplink transmission is less than a second threshold.

Based on the foregoing technical solution, according to the communication method provided in embodiments of this application, when the network device configures the first frequency domain resource for the terminal device to perform the uplink transmission, the terminal device performs condition determining. When the power headroom of the terminal device is less than the first threshold, or the ratio of the amount of the uplink data to be sent by the terminal device to the TBS configured by the network device for the current uplink transmission is less than the second threshold, the terminal device selects the second frequency domain resource with fewer subcarriers to perform the uplink transmission.

In this way, in a scenario in which the power headroom of the terminal device is insufficient, the terminal device performs the uplink transmission on a second frequency domain resource with fewer subcarriers. Because a quantity of the subcarriers in the second frequency domain resource is smaller, when a total transmit power of the terminal device remains unchanged, a transmit power allocated to each subcarrier is increased, thereby improving a transmission effect on each subcarrier, and further improving transmission performance of uplink transmission of the terminal device.

In a scenario in which the amount of the uplink data to be sent by the terminal device is insufficient, the terminal device performs the uplink transmission on a second frequency domain resource with fewer subcarriers. Because a quantity of the subcarriers in the second frequency domain resource is smaller, the terminal device may perform the uplink transmission at a smaller total transmit power while keeping sending power on each subcarrier unchanged, thereby reducing power consumption of the terminal device. In addition, the terminal device performs the uplink transmission based on the second frequency domain resource, so that a TBS size can be reduced, and then a quantity of padding bits that need to be padded with vacant bits is further reduced, thereby improving uplink transmission efficiency.

With reference to the first aspect, in a possible implementation, a value of the first threshold may be determined based on at least one of the following: a channel type used for the uplink transmission or a signal type used for the uplink transmission; a scheduling type used for the uplink transmission; a resource identifier used for the uplink data transmission in at least two uplink data transmission resources configured when the uplink transmission is uplink data transmission; and a resource identifier used for the uplink control transmission in at least two uplink control transmission resources configured when the uplink transmission is uplink control transmission.

Based on this, in different uplink transmission scenarios, different first thresholds may be configured for the terminal device, so that a more proper first threshold may be configured for each uplink transmission scenario.

With reference to the first aspect, in a possible implementation, a bandwidth of the second frequency domain resource is less than a bandwidth of the first frequency domain resource.

Based on this, the terminal device may determine the second frequency domain resource by reducing the bandwidth of the first frequency domain resource.

With reference to the first aspect, in a possible implementation, the bandwidth of the first frequency domain resource is T times the bandwidth of the second frequency domain resource, and a value of T is a preset value, or a value of T is carried in at least one of the following: higher-layer signaling sent by the network device to the terminal device, a media access control control element (media access control control element, MAC-CE) sent by the network device to the terminal device, and downlink control information (downlink control information, DCI) sent by the network device to the terminal device.

Based on this, the terminal device may determine a bandwidth of a second frequency domain based on a preset T value, or a T value sent by the network device by using higher-layer signaling, a MAC-CE, or DCI, and a bandwidth of a first frequency domain.

With reference to the first aspect, in a possible implementation, the second frequency domain resource includes N resource block groups (resource block group, RBG), the N RBGs are N RBGs among M RBGs in the first frequency domain resource, both M and N are positive integers, and a value of N is a value determined by rounding down a ratio of M to T, or a value of N is a value determined by rounding up a ratio of M to T.

Based on this, the terminal device may determine the N RBGs from the M RBGs in the first frequency domain resource as the second frequency domain resources.

With reference to the first aspect, in a possible implementation, the N RBGs are N RBGs with highest frequencies in the M RBGs; or
the N RBGs are N RBGs with lowest frequencies in the M RBGs; or
the N RBGs are N RBGs whose corresponding RBG sequence numbers P satisfy MOD(P, T)=S in the M RBGs, where MOD is a modulo operation, P is a non-negative integer, S is a non-negative integer, and S is less than T.

Based on this, the terminal device may determine the N RBGs from the M RBGs in the first frequency domain resource as the second frequency domain resources in any one of the foregoing manners.

With reference to the first aspect, in a possible implementation, the terminal device determines the N RBGs based on a slot sequence number of the uplink transmission and the M RBGs.

Based on this, in different slots configured by the network device for the terminal device, the terminal device may select different N RBGs for the terminal device by using different methods, so that the terminal device can perform frequency hopping transmission between the different slots, and obtain a frequency domain diversity gain.

For example, the terminal device selects an RBG with a lowest frequency in a slot whose slot sequence number is an odd number, and the terminal device selects an RBG with a highest frequency in a slot whose slot sequence number is an even number. In this way, when the terminal device performs the uplink transmission in the different slots, the frequency hopping transmission can be performed between the different slots.

With reference to the first aspect, in a possible implementation, the terminal device determines the N RBGs based on a repetition (repetition) sequence number of the uplink transmission and the M RBGs.

Based on this, when the terminal device performs repetition (repetition), the terminal device may select N different RBGs for the terminal device in different repetitions by using different methods. The terminal device may perform frequency hopping transmission in the different repetitions.

For example, when a repetition sequence number is an odd number, the terminal device selects an RBG with a lowest sequence number frequency, and when a repetition sequence number is an even number, the terminal device selects an RBG with a highest sequence number frequency. The terminal device may perform frequency hopping transmission in the different repetitions.

With reference to the first aspect, in a possible implementation, the second frequency domain resource includes L physical resource block groups (physical resource block group, PRG), the L PRGs are L PRGs among K PRGs in the first frequency domain resource, both L and K are positive integers, and a value of L is a value determined by rounding down a ratio of K to T, or a value of L is a value determined by rounding up a ratio of K to T.

Based on this, the terminal device may determine the L PRGs from the K PRGs in the first frequency domain resources as the second frequency domain resource.

With reference to the first aspect, in a possible implementation, the L PRGs are L PRGs with highest frequencies in the K PRGs, or
the L PRGs are L PRGs with lowest frequencies in the K PRGs, or
the L PRGs are L PRGs whose corresponding PRG sequence numbers Q satisfy MOD(Q, T)=S in the K PRGs, where MOD is a modulo operation, Q is a non-negative integer, S is a non-negative integer, and S is less than T.

Based on this, the terminal device may determine the L PRGs from the K PRGs in the first frequency domain resource as the second frequency domain resources in any one of the foregoing manners.

With reference to the first aspect, in a possible implementation, the terminal device determines the L PRGs based on a slot sequence number of the uplink transmission and the K PRGs.

Based on this, in different slots configured by the network device for the terminal device, the terminal device may select different L PRGs for the terminal device by using different methods, so that the terminal device can perform frequency hopping transmission between the different slots.

For example, the terminal device selects a PRG with a lowest frequency in a slot whose slot sequence number is an odd number, and the terminal device selects a PRG with a highest frequency in a slot whose slot sequence number is an even number. In this way, when performing uplink transmission in different slots, the terminal device may perform frequency hopping transmission between the different slots.

With reference to the first aspect, in a possible implementation, the terminal device determines the L PRGs based on a repetition (repetition) sequence number of the uplink transmission and the K PRGs.

Based on this, when the terminal device performs repetition (repetition), the terminal device may select L different RBGs for the terminal device in different repetitions by using different methods. The terminal device may perform frequency hopping transmission in the different repetitions.

For example, when the repetition sequence number is an odd number, the terminal device selects a PRG with a lowest frequency, and when the repetition sequence number is an even number, the terminal device selects a PRG with a highest frequency. The terminal device may perform frequency hopping transmission in the different repetitions.

With reference to the first aspect, in a possible implementation, a subcarrier spacing of the second frequency domain resource is greater than a subcarrier spacing of the first frequency domain resource.

Based on this, the terminal device may determine the second frequency domain resource by increasing the subcarrier spacing of the first frequency domain resource.

With reference to the first aspect, in a possible implementation, the subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the first aspect, in a possible implementation, the value of T is determined based on a value of the PH.

Based on this, the terminal device may select different T values when power headrooms are different, so that the terminal device can determine second frequency domain resources of different subcarrier quantities when the power headrooms are different, thereby improving applicability of the method.

With reference to the first aspect, in a possible implementation, the terminal device receives second indication information from the network device, where the second indication information indicates a transmission mode of the terminal device, and the transmission mode includes: performing, by the terminal device, the uplink transmission based on the second frequency domain resource when a first preset condition is met.

Based on this, the terminal device determines, based on the second indication information of the network device, whether to use the transmission mode in the communication method recorded in this application. When the network device indicates the terminal device to use the transmission mode recorded in this application, the terminal device performs the uplink transmission based on the second frequency domain resource when a first preset condition is met. When the network device does not indicate the terminal device to use the transmission mode recorded in this application, the terminal device still performs the uplink transmission by using the first frequency domain resource.

With reference to the first aspect, in a possible implementation, the second indication information is carried in at least one of the following: higher-layer signaling sent by the network device to the terminal device, a MAC-CE sent by the network device to the terminal device, and DCI sent by the network device to the terminal device.

Based on this, the network device may send the second indication information to the terminal device in a plurality of manners, thereby increasing an applicable scenario of embodiments of this application.

With reference to the first aspect, in a possible implementation, if the uplink transmission of the terminal device is any one of the following: dynamically scheduled uplink data transmission, uplink control channel transmission corresponding to dynamically scheduled downlink shared channel transmission, uplink control channel transmission corresponding to a channel state information-reference signal resource (channel state information-reference signal resource, CSI-RS), or aperiodic channel sounding reference signal (sounding reference signal, SRS) transmission, the second indication information is carried in higher-layer signaling sent by the network device to the terminal device, or the second indication information is carried in DCI sent by the network device to the terminal device.

Based on this, before the terminal device performs the uplink transmission, if the network device sends DCI to the terminal device in advance to schedule current uplink transmission, the network device may send the second indication information to the terminal device by using the DCI or higher-layer signaling.

With reference to the first aspect, in a possible implementation, if the uplink transmission of the terminal device is any one of the following: uplink data channel transmission with a configured grant Typel, periodic uplink control channel transmission, or periodic SRS transmission, the second indication information is carried in the higher-layer signaling sent by the network device to the terminal device.

Based on this, before the terminal device performs the uplink transmission, if the network device does not send DCI to the terminal device in advance to schedule current uplink transmission, the network device may send the second indication information to the terminal device by using higher-layer signaling.

With reference to the first aspect, in a possible implementation, if uplink sending information of the terminal device is any one of the following: uplink data channel transmission with a configured grant Type2, uplink control channel transmission carrying semi-persistent channel state information (channel state information, CSI), or uplink data channel transmission carrying semi-persistent CSI, the second indication information is carried in higher-layer signaling sent by the network device to the terminal device, or the second indication information is carried in activation DCI, where the DCI is used to activate an uplink data channel transmission resource with a configured grant Type2, or the DCI is used to activate an uplink control channel transmission resource carrying semi-persistent CSI, or the DCI is used to activate an uplink data channel transmission resource carrying semi-persistent CSI.

Based on this, before the terminal device performs the uplink transmission, if the network device sends the activation DCI to the terminal device in advance to activate the uplink transmission resource, the network device may send the second indication information to the terminal device by using the activation DCI or the higher-layer signaling.

Based on the foregoing technical solution, the network device may flexibly select the signaling message that carries the second indication information. When the network device carries the second indication information by using the higher-layer signaling, physical layer signaling overheads can be reduced. When the network device uses the MAC-CE or the DCI to carry the second indication information, the network device may flexibly control the transmission mode of the terminal device. For example, the transmission mode recorded in this application is disabled in a timely manner based on load, so that blind detection of uplink transmission parameters can be avoided.

According to a second aspect, a communication method is provided, including: sending, by a network device, first indication information to a terminal device, where the first indication information indicates a first frequency domain resource to be used by the terminal device for uplink transmission; and
receiving, by the network device, uplink transmission information transmitted by the terminal device by using a second frequency domain resource, where a quantity of subcarriers of the second frequency domain resource is less than a quantity of subcarriers of the first frequency domain resource, and a first preset condition includes at least one of the following: a power headroom PH of the terminal device is less than a first threshold, and a ratio of an amount of uplink data to be sent by the terminal device to a TBS configured by the network device for the uplink transmission is less than a second threshold.

With reference to the second aspect, in a possible implementation, a value of the first threshold may be determined based on at least one of the following: a channel type used for the uplink transmission or a signal type used for the uplink transmission; a scheduling type used for the uplink transmission; a resource identifier used for the uplink data transmission in at least two uplink data transmission resources configured when the uplink transmission is uplink data transmission; and a resource identifier used for the uplink control transmission in at least two uplink control transmission resources configured when the uplink transmission is uplink control transmission.

With reference to the second aspect, in a possible implementation, a bandwidth of the second frequency domain resource is less than a bandwidth of the first frequency domain resource.

With reference to the second aspect, in a possible implementation, the bandwidth of the first frequency domain resource is T times the bandwidth of the second frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the second aspect, in a possible implementation, the second frequency domain resource includes N RBGs, the N RBGs are N RBGs among M RBGs in the first frequency domain resource, both M and N are positive integers, and a value of N is a value determined by rounding down a ratio of M to T, or a value of N is a value determined by rounding up a ratio of M to T.

With reference to the second aspect, in a possible implementation, the N RBGs are N RBGs with highest frequencies in the M RBGs; or
the N RBGs are N RBGs with lowest frequencies in the M RBGs; or
the N RBGs are N RBGs whose corresponding RBG sequence numbers P satisfy MOD(P, T)=S in the M RBGs, where MOD is a modulo operation, P is a non-negative integer, S is a non-negative integer, and S is less than T.

With reference to the second aspect, in a possible implementation, the second frequency domain resource includes L PRGs, the L PRGs are L PRGs among K PRGs in the first frequency domain resource, both L and K are positive integers, and a value of L is a value determined by rounding down a ratio of K to T, or a value of L is a value determined by rounding up a ratio of K to T.

With reference to the second aspect, in a possible implementation, the L PRGs are L PRGs with highest frequencies in the K PRGs; or
the L PRGs are L PRGs with lowest frequencies in the K PRGs, or
the L PRGs are L PRGs whose corresponding PRG sequence numbers Q satisfy MOD(Q, T)=S in the K PRGs, where MOD is a modulo operation, Q is a non-negative integer, S is a non-negative integer, and S is less than T.

With reference to the second aspect, in a possible implementation, a subcarrier spacing of the second frequency domain resource is greater than a subcarrier spacing of the first frequency domain resource.

With reference to the second aspect, in a possible implementation, the subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the second aspect, in a possible implementation, the value of T is determined based on a value of the PH.

With reference to the second aspect, in a possible implementation, the network device sends second indication information to the terminal device, where the second indication information indicates a transmission mode of the terminal device, and the transmission mode includes: performing, by the terminal device, the uplink transmission based on the second frequency domain resource when a first preset condition is met.

With reference to the second aspect, in a possible implementation, the second indication information is carried in at least one of the following: higher-layer signaling sent by the network device to the terminal device, a MAC-CE sent by the network device to the terminal device, and DCI sent by the network device to the terminal device.

With reference to the second aspect, in a possible implementation, if the uplink transmission of the terminal device is any one of the following: dynamically scheduled uplink data transmission, uplink control channel transmission corresponding to dynamically scheduled downlink shared channel transmission, uplink control channel transmission corresponding to a CSI-RS, or aperiodic SRS transmission, the second indication information is carried in higher-layer signaling sent by the network device to the terminal device, or the second indication information is carried in DCI sent by the network device to the terminal device.

With reference to the second aspect, in a possible implementation, if the uplink transmission of the terminal device is any one of the following: uplink data channel transmission with a configured grant Typel, periodic uplink control channel transmission, or periodic SRS transmission, the second indication information is carried in higher-layer signaling sent by the network device to the terminal device.

With reference to the second aspect, in a possible implementation, if uplink sending information of the terminal device is any one of the following: uplink data channel transmission with a configured grant Type2, uplink control channel transmission carrying semi-persistent CSI, or uplink data channel transmission carrying semi-persistent CSI, the second indication information is carried in higher-layer signaling sent by the network device to the terminal device, or the second indication information is carried in activation DCI, where the DCI is used to activate an uplink data channel transmission resource with a configured grant Type2, or the DCI is used to activate an uplink control channel transmission resource carrying semi-persistent CSI, or the DCI is used to activate an uplink data channel transmission resource carrying semi-persistent CSI.

According to a third aspect, a communication apparatus is provided, including a communication unit and a processing unit.

The communication unit is configured to receive first indication information from a network device, where the first indication information indicates a first frequency domain resource to be used by the terminal device for uplink transmission.

The processing unit is configured to indicate the communication unit to perform the uplink transmission based on a second frequency domain resource when a first preset condition is met, where a quantity of subcarriers of the second frequency domain resource is less than a quantity of subcarriers of the first frequency domain resource, and the first preset condition includes at least one of the following: a power headroom PH of the terminal device is less than a first threshold, and a ratio of an amount of uplink data to be sent by the terminal device to a TBS configured by the network device for the uplink transmission is less than a second threshold.

With reference to the third aspect, in a possible implementation, a value of the first threshold may be determined based on at least one of the following: a channel type used for the uplink transmission or a signal type used for the uplink transmission; a scheduling type used for the uplink transmission; a resource identifier used for the uplink data transmission in at least two uplink data transmission resources configured when the uplink transmission is uplink data transmission; and a resource identifier used for the uplink control transmission in at least two uplink control transmission resources configured when the uplink transmission is uplink control transmission.

With reference to the third aspect, in a possible implementation, a bandwidth of the second frequency domain resource is less than a bandwidth of the first frequency domain resource.

With reference to the third aspect, in a possible implementation, the bandwidth of the first frequency domain resource is T times the bandwidth of the second frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the third aspect, in a possible implementation, the second frequency domain resource includes N RBGs, the N RBGs are N RBGs among M RBGs in the first frequency domain resource, both M and N are positive integers, and a value of N is a value determined by rounding down a ratio of M to T, or a value of N is a value determined by rounding up a ratio of M to T.

With reference to the third aspect, in a possible implementation, the N RBGs are N RBGs with highest frequencies in the M RBGs; or
the N RBGs are N RBGs with lowest frequencies in the M RBGs; or
the N RBGs are N RBGs whose corresponding RBG sequence numbers P satisfy MOD(P, T)=S in the M RBGs, where MOD is a modulo operation, P is a non-negative integer, S is a non-negative integer, and S is less than T.

With reference to the third aspect, in a possible implementation, the processing unit is further configured to determine the N RBGs based on a slot sequence number of the uplink transmission and the M RBGs.

With reference to the third aspect, in a possible implementation, the processing unit is further configured to determine the N RBGs based on a repetition (repetition) sequence number of the uplink transmission and the M RBGs.

With reference to the third aspect, in a possible implementation, the second frequency domain resource includes L PRGs, the L PRGs are L PRGs among K PRGs in the first frequency domain resource, both L and K are positive integers, and a value of L is a value determined by rounding down a ratio of K to T, or a value of L is a value determined by rounding up a ratio of K to T.

With reference to the third aspect, in a possible implementation, the L PRGs are L PRGs with highest frequencies in the K PRGs.
the L PRGs are L PRGs with lowest frequencies in the K PRGs, or
the L PRGs are L PRGs whose corresponding PRG sequence numbers Q satisfy MOD(Q, T)=S in the K PRGs, where MOD is a modulo operation, Q is a non-negative integer, S is a non-negative integer, and S is less than T.

With reference to the third aspect, in a possible implementation, the processing unit is further configured to determine the L PRGs based on a slot sequence number of the uplink transmission and the K PRGs.

With reference to the third aspect, in a possible implementation, the processing unit is further configured to determine the L PRGs based on a repetition (repetition) sequence number of the uplink transmission and the K PRGs.

With reference to the third aspect, in a possible implementation, a subcarrier spacing of the second frequency domain resource is greater than a subcarrier spacing of the first frequency domain resource.

With reference to the third aspect, in a possible implementation, the subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the third aspect, in a possible implementation, the value of T is determined based on a value of the PH.

With reference to the third aspect, in a possible implementation, the communication unit is further configured to:
receive second indication information from the network device, where the second indication information indicates a transmission mode of the terminal device, and the transmission mode includes: performing, by the terminal device, the uplink transmission based on the second frequency domain resource when a first preset condition is met.

With reference to the third aspect, in a possible implementation, the second indication information is carried in at least one of the following: higher-layer signaling sent by the network device to the terminal device, a MAC-CE sent by the network device to the terminal device, and DCI sent by the network device to the terminal device.

With reference to the third aspect, in a possible implementation, if the uplink transmission of the terminal device is any one of the following: dynamically scheduled uplink data transmission, uplink control channel transmission corresponding to dynamically scheduled downlink shared channel transmission, uplink control channel transmission corresponding to a CSI-RS, or aperiodic SRS transmission, the second indication information is carried in higher-layer signaling sent by the network device to the terminal device, or the second indication information is carried in DCI sent by the network device to the terminal device.

With reference to the third aspect, in a possible implementation, if the uplink transmission of the terminal device is any one of the following: uplink data channel transmission with a configured grant Typel, periodic uplink control channel transmission, or periodic SRS transmission, the second indication information is carried in higher-layer signaling sent by the network device to the terminal device.

With reference to the third aspect, in a possible implementation, if uplink sending information of the terminal device is any one of the following: uplink data channel transmission with a configured grant Type2, uplink control channel transmission carrying semi-persistent CSI, or uplink data channel transmission carrying semi-persistent CSI, the second indication information is carried in higher-layer signaling sent by the network device to the terminal device, or the second indication information is carried in activation DCI, where the DCI is used to activate an uplink data channel transmission resource with a configured grant Type2, or the DCI is used to activate an uplink control channel transmission resource carrying semi-persistent CSI, or the DCI is used to activate an uplink data channel transmission resource carrying semi-persistent CSI.

According to a fourth aspect, a communication apparatus is provided, including a processing unit and a communication unit. The processing unit is configured to indicate the communication unit to send first indication information to the terminal device, where the first indication information indicates a first frequency domain resource to be used by the terminal device for uplink transmission.

The processing unit is further configured to indicate the communication unit to receive uplink transmission information transmitted by the terminal device by using a second frequency domain resource, where a quantity of subcarriers of the second frequency domain resource is less than a quantity of subcarriers of the first frequency domain resource, and a first preset condition includes at least one of the following: a power headroom PH of the terminal device is less than a first threshold, and a ratio of an amount of uplink data to be sent by the terminal device to a TBS configured by the network device for the uplink transmission is less than a second threshold.

With reference to the fourth aspect, in a possible implementation, a value of the first threshold may be determined based on at least one of the following: a channel type used for the uplink transmission or a signal type used for the uplink transmission; a scheduling type used for the uplink transmission; a resource identifier used for the uplink data transmission in at least two uplink data transmission resources configured when the uplink transmission is uplink data transmission; and a resource identifier used for the uplink control transmission in at least two uplink control transmission resources configured when the uplink transmission is uplink control transmission.

With reference to the fourth aspect, in a possible implementation, a bandwidth of the second frequency domain resource is less than a bandwidth of the first frequency domain resource.

With reference to the fourth aspect, in a possible implementation, the bandwidth of the first frequency domain resource is T times the bandwidth of the second frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the fourth aspect, in a possible implementation, the second frequency domain resource includes N RBGs, the N RBGs are N RBGs among M RBGs in the first frequency domain resource, both M and N are positive integers, and a value of N is a value determined by rounding down a ratio of M to T, or a value of N is a value determined by rounding up a ratio of M to T.

With reference to the fourth aspect, in a possible implementation, the N RBGs are N RBGs with highest frequencies in the M RBGs; or
the N RBGs are N RBGs with lowest frequencies in the M RBGs; or
the N RBGs are N RBGs whose corresponding RBG sequence numbers P satisfy MOD(P, T)=S in the M RBGs, where MOD is a modulo operation, P is a non-negative integer, S is a non-negative integer, and S is less than T.

With reference to the fourth aspect, in a possible implementation, the second frequency domain resource includes L PRGs, the L PRGs are L PRGs among K PRGs in the first frequency domain resource, both L and K are positive integers, and a value of L is a value determined by rounding down a ratio of K to T, or a value of L is a value determined by rounding up a ratio of K to T.

With reference to the fourth aspect, in a possible implementation, the L PRGs are L PRGs with highest frequencies in the K PRGs; or
the L PRGs are L PRGs with lowest frequencies in the K PRGs, or
the LPRGs are L PRGs whose corresponding PRG sequence numbers Q satisfy MOD(Q, T)=S in the K PRGs, where MOD is a modulo operation, Q is a non-negative integer, S is a non-negative integer, and S is less than T.

With reference to the fourth aspect, in a possible implementation, a subcarrier spacing of the second frequency domain resource is greater than a subcarrier spacing of the first frequency domain resource.

With reference to the fourth aspect, in a possible implementation, the subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

With reference to the fourth aspect, in a possible implementation, the value of T is determined based on a value of the PH.

With reference to the fourth aspect, in a possible implementation, the processing unit is further configured to indicate the communication unit to send second indication information to the terminal device, where the second indication information indicates a transmission mode of the terminal device, and the transmission mode includes: performing, by the terminal device, uplink transmission based on the second frequency domain resource when a first preset condition is met.

With reference to the fourth aspect, in a possible implementation, the second indication information is carried in at least one of the following: higher-layer signaling sent by the network device to the terminal device, a MAC-CE sent by the network device to the terminal device, and DCI sent by the network device to the terminal device.

With reference to the fourth aspect, in a possible implementation, if the uplink transmission of the terminal device is any one of the following: dynamically scheduled uplink data transmission, uplink control channel transmission corresponding to dynamically scheduled downlink shared channel transmission, uplink control channel transmission corresponding to a CSI-RS, or aperiodic SRS transmission, the second indication information is carried in higher-layer signaling sent by the network device to the terminal device, or the second indication information is carried in DCI sent by the network device to the terminal device.

With reference to the fourth aspect, in a possible implementation, if the uplink transmission of the terminal device is any one of the following: uplink data channel transmission with a configured grant Typel, periodic uplink control channel transmission, or periodic SRS transmission, the second indication information is carried in higher-layer signaling sent by the network device to the terminal device.

With reference to the fourth aspect, in a possible implementation, if uplink sending information of the terminal device is any one of the following: uplink data channel transmission with a configured grant Type2, uplink control channel transmission carrying semi-persistent CSI, or uplink data channel transmission carrying semi-persistent CSI, the second indication information is carried in higher-layer signaling sent by the network device to the terminal device, or the second indication information is carried in activation DCI, where the DCI is used to activate an uplink data channel transmission resource with a configured grant Type2, or the DCI is used to activate an uplink control channel transmission resource carrying semi-persistent CSI, or the DCI is used to activate an uplink data channel transmission resource carrying semi-persistent CSI.

According to a fifth aspect, this application provides a communication apparatus, including a processor, a storage medium, at least one processor, and an interface circuit, where the interface circuit is configured to receive a signal from a communication apparatus other than the communication apparatus and transmit the signal to the processor, or send a signal from the processor to a communication apparatus other than the communication apparatus, and the processor is configured to implement the method described according to the first aspect and any one of the possible implementations of the first aspect by using a logic circuit or executing a code instruction. The communication apparatus may be a terminal device, or may be a chip in a terminal device.

According to a sixth aspect, this application provides a communication apparatus, including a processor, a storage medium, at least one processor, and an interface circuit, where the interface circuit is configured to receive a signal from a communication apparatus other than the communication apparatus and transmit the signal to the processor, or send a signal from the processor to a communication apparatus other than the communication apparatus, and the processor is configured to implement the method according to the second aspect and any one of the possible implementations of the second aspect by using a logic circuit or executing a code instruction. The communication apparatus may be a network device, or may be a chip in a network device.

According to a seventh aspect, this application provides a communication system, including a first communication apparatus and a second communication apparatus. The first communication apparatus is configured to perform the method described according to the first aspect and any one of the possible implementations of the first aspect. The second communication apparatus is configured to perform the method according to the second aspect and any one of the possible implementations of the second aspect.

According to an eighth aspect, this application provides a computer-readable storage medium. The computer-readable storage medium stores instructions, and when the instructions are run on a computer, the computer is enabled to perform the method described according to the first aspect and any one of the possible implementations of the first aspect.

According to a ninth aspect, this application provides a computer-readable storage medium. The computer-readable storage medium stores instructions, and when the instructions are run on a computer, the computer is enabled to perform the method described according to the second aspect and any one of the possible implementations of the second aspect.

According to a tenth aspect, this application provides a computer program product including instructions. When the computer program product runs on a computer, the computer is enabled to perform the method described according to the first aspect and any one of the possible implementations of the first aspect.

According to an eleventh aspect, this application provides a computer program product including instructions. When the computer program product runs on a computer, the computer is enabled to perform the method described according to the second aspect and any one of the possible implementations of the second aspect.

It should be understood that, descriptions of technical features, technical solutions, beneficial effect, or similar words in this application do not imply that all features and advantages can be implemented in any individual embodiment. On the contrary, it may be understood that, the descriptions of the features or the beneficial effect mean that at least one embodiment includes a specific technical feature, technical solution, or beneficial effect. Therefore, the descriptions of the technical features, the technical solutions, or the beneficial effect in this specification may not necessarily be specific to a same embodiment. Further, the technical features, the technical solutions, and the beneficial effect described in the embodiments may be combined in any proper manner. A person skilled in the art may understand that an embodiment may be implemented without one or more specific technical features or technical solutions, or beneficial effect in a specific embodiment. In other embodiments, additional technical features and beneficial effect may be further identified in a specific embodiment that does not reflect all embodiments.

### BRIEF DESCRIPTION OF DRAWINGS

FIG. 1 is a diagram of a system architecture of a communication system according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6 is a schematic flowchart of another communication method according to an embodiment of this application;
FIG. 7 is a schematic flowchart of another communication method according to an embodiment of this application;
FIG. 8 is a schematic diagram of the structure of a communication apparatus according to an embodiment of this application;
FIG. 9 is a schematic diagram of a hardware structure of a communication apparatus according to an embodiment of this application;
FIG. 10 is a schematic diagram of a hardware structure of another communication apparatus according to an embodiment of this application;
FIG. 11 is a schematic diagram of a hardware structure of a terminal device according to an embodiment of this application; and
FIG. 12 is a schematic diagram of a hardware structure of a network device according to an embodiment of this application.

### DESCRIPTION OF EMBODIMENTS

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

It should be noted that, in this application, words such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

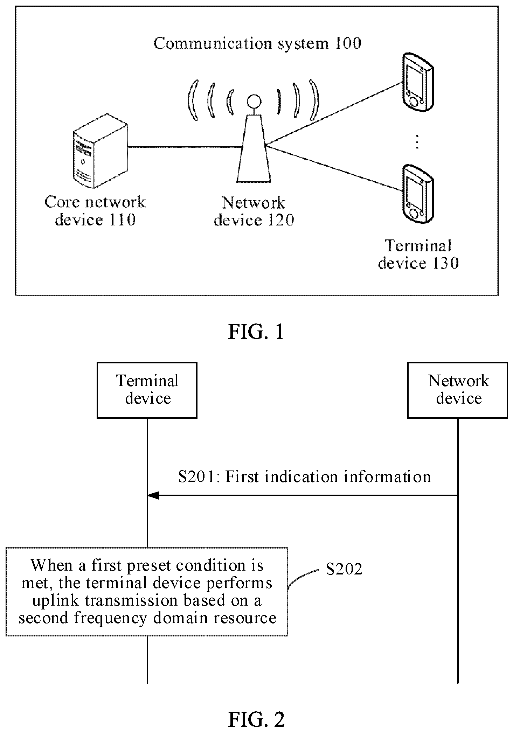

The communication method provided in embodiments of this application is applied to a communication system 100 shown in FIG. 1.

As shown in FIG. 1, the communication system 100 includes a core network device 110, a network device 120 (an access network device), and at least one terminal device 130. The terminal device is connected to the network device in a wireless manner, and the network device is connected to the core network device in a wireless manner or a wired manner. The core network device and the network device may be different physical devices independent of each other; functions of the core network device and logical functions of the network device may be integrated into a same physical device; or some functions of the core network device and some functions of the network device may be integrated into one physical device. The terminal device may be located at a fixed position, or may be mobile. FIG. 1 is only a schematic diagram. The communication system may further include another network device, for example, may further include a wireless relay device and a wireless backhaul device, which are not shown in FIG. 1. Quantities of core network devices, network devices, and terminal devices included in the communication system are not limited in embodiments of this application.

The network device 120 is configured to configure an uplink transmission resource for the terminal device, and communicate with the terminal device 130. The terminal device 130 is configured to perform uplink data transmission or uplink control transmission based on the uplink transmission resource configured by the network device.

The communication system in embodiments of this application includes but is not limited to a long term evolution (long term evolution, LTE) system, a 5th-generation (5th-generation, 5G) system, a new radio (new radio, NR) system, a wireless local area network (wireless local area network, WLAN) system, a future evolved system, or a system converging a plurality of communication technologies. For example, the method provided in embodiments of this application may be specifically applied to an evolved-universal terrestrial radio access network (evolved-universal terrestrial radio access network, E-UTRAN) system and a next generation-radio access network (next generation-radio access network, NG-RAN) system.

The network device in embodiments of this application is a network-side entity configured to send a signal, receive a signal, or send a signal and receive a signal. The network device may be an apparatus that is deployed in a radio access network (radio access network, RAN) and that provides a wireless communication function for a terminal device, for example, may be a TRP, a base station (for example, an evolved NodeB (evolved NodeB, eNB or eNodeB), a next generation node base station (next generation node base station, gNB), or a next generation eNB (next generation eNB, ng-eNB)), various forms of control nodes (for example, a network controller, a radio controller (such as a radio controller in a cloud radio access network (cloud radio access network, CRAN) scenario)), or a road side unit (road side unit, RSU). Specifically, the network device may be a macro base station, a micro base station (also referred to as a small cell), a relay station, an access point (access point, AP), or the like in various forms, or may be an antenna panel of a base station. The control node may be connected to a plurality of base stations, and configure resources for a plurality of terminal devices that fall within coverage of the plurality of base stations. In systems using different radio access technologies (radio access technologies, RATs), names of devices having a base station function may be different. For example, the base station may be referred to as an eNB or an eNodeB in an LTE system, and may be referred to as a gNB in a 5G system or an NR system. A specific name of the base station is not limited in this application. The network device may alternatively be a network device in a future evolved public land mobile network (public land mobile network, PLMN) or the like.

The terminal device in embodiments of this application is a user-side entity configured to receive a signal, send a signal, or receive a signal and send a signal. The terminal device is configured to provide one or more of a voice service and a data connectivity service for a user. The terminal device may also be referred to as user equipment (user equipment, UE), a terminal, an access terminal, a subscriber unit, a subscriber station, a mobile station, a remote station, a remote terminal, a mobile device, a user terminal, a wireless communication device, a user agent, or a user apparatus. The terminal device may be a vehicle to everything (vehicle to everything, V2X) device. For example, the terminal device may be a smart car or an intelligent car (smart car or intelligent car), a digital car (digital car), an unmanned car or a driverless car or a pilotless car or an automobile (unmanned car or driverless car or pilotless car or automobile), a self-driving car or an autonomous car (self-driving car or autonomous car), a pure EV or Battery EV (pure EV or Battery EV), a hybrid electric vehicle (hybrid electric vehicle, HEV), a range extended EV (range extended EV, REEV), a plug-in HEV (plug-in HEV, PHEV), a new energy vehicle (new energy vehicle), or the like. Alternatively, the terminal device may be a device to device (device to device, D2D) device, for example, an electricity meter or a water meter. The terminal device may also be a mobile station (mobile station, MS), a subscriber unit (subscriber unit), an unmanned aerial vehicle, an internet of things (internet of things, IoT) device, a station (station, ST) in a WLAN, a cellular phone (cellular phone), a smart phone (smart phone), a cordless telephone set, a wireless data card, a tablet computer, a session initiation protocol (session initiation protocol, SIP) phone, a wireless local loop (wireless local loop, WLL) station, a personal digital assistant (personal digital assistant, PDA) device, a laptop computer (laptop computer), a machine type communication (machine type communication, MTC), a handheld device having a wireless communication function, a computing device, another processing device connected to a wireless modem, an in-vehicle device, a wearable device (may also be referred to as a wearable intelligent device), or the like. The terminal device may alternatively be a terminal device in a next-generation communication system, for example, a terminal device in a 5G system, a terminal device in a future evolved PLMN, or a terminal device in an NR system.

The network device and the terminal device may be deployed on the land, including an indoor device, an outdoor device, a handheld device, or a vehicle-mounted device; may be deployed on the water; or may be deployed on an airplane, a balloon, and a satellite in the air. An application scenario of the network device and the terminal device is not limited in embodiments of this application.

Embodiments of this application may be applicable to downlink signal transmission, uplink signal transmission, or device to device (device to device, D2D) signal transmission. For the downlink signal transmission, a sending device is a network device, and correspondingly a receiving device is a terminal device. For the uplink signal transmission, a sending device is a terminal device, and correspondingly a receiving device is a network device. For the D2D signal transmission, a sending device is a terminal device, and correspondingly a receiving device is also a terminal device. A signal transmission direction is not limited in embodiments of this application.

Communication between the network device and the terminal device and communication between terminal devices may be performed by using a licensed spectrum (licensed spectrum), an unlicensed spectrum (unlicensed spectrum), or both the licensed spectrum and the unlicensed spectrum. Communication between the network device and the terminal device and communication between terminal devices may be performed by using a spectrum below 6G, a spectrum above 6G, or both the spectrum below 6G and the spectrum above 6G. A spectrum resource used between the network device and the terminal device is not limited in embodiments of this application.

To make this application clearer, some concepts involved in this application are first briefly described.

### 1. Power Headroom Report (power headroom report, PHR)

PHR represents a difference between a maximum transmit power allowed by a terminal device and a transmit power of a terminal indicated by a network device.

The transmit power of the terminal indicated by the network device is determined based on a transmission rate of uplink transmission required by the network device. For example, a method, indicated by the network device, for transmitting a transmit power of a physical uplink shared channel (physical uplink shared channel, PUSCH) by the terminal is as follows: the network device determines, based on the required transmission rate of the PUSCH, the transmit power for transmitting the PUSCH by the terminal device.

In the PH, the transmit power of the terminal indicated by the network device is greater than the maximum transmit power allowed by the terminal device. In other words, there is a case in which the value of the PH is a negative value.

Specifically, when the maximum transmit power allowed by the terminal device is greater than the transmit power of the terminal indicated by the network device, the value of the PH is a positive value. In this case, the terminal device still has a power headroom that can be allocated. When allocating transmission resources to the terminal device, the network device may continue to increase a quantity of transmission resources allocated to the terminal device.

When the maximum transmit power allowed by the terminal device is greater than the transmit power of the terminal indicated by the network device, the value of the PH is a negative value. In this case, the transmit power required by the uplink transmission rate scheduled by the network device for the terminal device has exceeded the maximum transmit power allowed by the terminal device. When the network device subsequently allocates transmission resources to the terminal device, the network device needs to reduce a quantity of transmission resources allocated to the terminal device.

In an NR system, a range of the PH reported in the PHR is from -32 dB to +32 dB. A power headroom (POWER_HEADROOM) level is used in the PHR to represent different PH value ranges. A correspondence between POWER_HEADROOM and a PH value range is shown in the following Table 1.

**Table 1**

| Reported value (reported value) | Measured quantity value (measured quantity value) (dB) |
|---|---|
| POWER HEADROOM_0 | PH < -32 |
| POWER_HEADROOM_1 | -32 ≤ PH < -31 |
| POWER_HEADROOM_2 | -31 ≤ PH < -30 |
| POWER_HEADROOM_3 | -30 ≤ PH < -29 |
| ... | ... |
| POWER_HEADROOM_53 | 20 ≤ PH <21 |
| POWER_HEADROOM_54 | 21 ≤ PH <22 |
| POWER HEADROOM_55 | 22 ≤ PH < 24 |
| POWER_HEADROOM_56 | 24 ≤ PH <26 |
| POWER_HEADROOM_57 | 26 ≤ PH <28 |
| POWER_HEADROOM_58 | 28 ≤ PH <30 |
| POWER_HEADROOM_59 | 30 ≤ PH <32 |
| POWER_HEADROOM_60 | 32≤ PH <34 |
| POWER_HEADROOM_61 | 34 ≤ PH <36 |
| POWER_HEADROOM_62 | 36≤ PH <38 |
| POWER_HEADROOM_63 | PH ≥ 38 |

### 2. PHR Trigger Condition

One or more PHR reporting trigger conditions are preset in a terminal device, and the terminal device sends the PHR to a network device when the PHR reporting trigger condition is met.

Currently, the PHR trigger condition mainly includes the following condition 1 to condition 6. The following describes the condition 1 and the condition 6 in detail.

Condition 1: The terminal device determines that a PHR-prohibit timer (phr-ProhibitTimer) expires or has expired, and a path loss change of the terminal device exceeds a first preset threshold: phr-Tx-PowerFactorChange dB.

For the path loss change of the terminal device, reference may be made to a path loss change used for path loss reference between the terminal device and the network device and a path loss of Media Access Control (media access control, MAC) for data transmission.

The path loss change refers to a difference between a current path loss and a path loss when the PHR is reported last time.

Condition 2: The terminal device determines that a PHR periodic timer (phr-PeriodicTimer) expires.

Condition 3: The terminal device receives a PHR function configured (or reconfigured) by the network device, and the network device does not disable the PHR function.

Condition 4: The terminal device determines that a secondary cell (Secondary Cell, SCell) is activated in an uplink MAC entity.

Condition 5: The terminal device establishes a connection to a new primary cell (Primary Cell, PCell).

Condition 6: The terminal device determines that the phr-ProhibitTimer expires or has expired, and at least one activated cell in a MAC entity that has an uplink resource for transmitting new data and that is corresponding to the terminal device meets the following condition: an uplink transmission resource is configured in the cell, or PUCCH transmission exists in the cell, and a power backoff change of the cell after a PHR is received last time exceeds a second preset threshold: phr-Tx-PowerFactorChange dB.

### 3. Scheduling Type for PUSCH Transmission

In an NR system, there are three PUSCH scheduling types:
Type 1: PUSCH transmission based on dynamic scheduling.

An implementation of the type 1 is as follows: the network device sends DCI to the terminal device to schedule the terminal device to transmit uplink data. The terminal device receives the DCI sent by the network device once, and performs PUSCH transmission once.

In the type 1, a transmission resource to be used by the terminal device for the PUSCH transmission is configured by the network device by using physical layer signaling, and real-time performance of the configuration is relatively high.

Type 2: PUSCH transmission based on a configured grant (Configured grant, CG) Type1.

A specific implementation of the type 2 is as follows: the network device configures a semi-persistent transmission resource for the terminal device by using higher-layer signaling. The transmission resource is a long-time effective transmission resource. When the terminal device needs to perform uplink transmission, the terminal device may directly perform the transmission on the transmission resource.

Type 3: PUSCH transmission based on a CG Type2.

A specific implementation of the type 3 is as follows: the network device configures a semi-persistent transmission resource for the terminal device by using higher-layer signaling. The transmission resource needs to be activated by the network device by sending activation DCI. After the transmission resource is activated by using the activation DCI, when the terminal device needs to perform uplink transmission, the terminal device may directly perform the transmission on the transmission resource. After the transmission resource is activated by using the activation DCI, the network device may further deactivate the transmission resource by using the deactivation DCI. The deactivated transmission resource cannot be used by the terminal device for transmission.

### 4. Frequency Domain Resource Allocation for an Uplink Channel

In an NR system, uplink transmission includes two modes: a transform precoding mode (DFT-s-OFDM) and a non-transform precoding mode (CP-OFDM).

In the transform precoding mode, frequency domain resources for the uplink transmission need to be consecutive. In the non-transform precoding mode, frequency domain resources for the uplink transmission may be several inconsecutive frequency domain resources.

Different frequency domain resource allocation manners of the uplink channel are applicable to different uplink transmission modes. For example, frequency domain resource allocation for a current uplink channel supports three manners: type0, type1, and type2. In the Type0 manner, frequency domain resources scheduled by the network device are inconsecutive. In the Type1 and Type2 manners, frequency domain resources scheduled by the network device are consecutive. Therefore, Type0 can be used only in the non-transform precoding mode, and type 1 and type2 can be used in both the transform precoding mode and the non-transform precoding mode. The following describes three allocation manners of the frequency domain resource allocation for an uplink channel: type0, type1, and type2.

### 4.1. Frequency domain resource allocation type0 for an uplink channel

In this allocation manner, RB allocation information of the frequency domain resource includes one bitmap, which indicates an RBG allocated to the terminal device. Each RBG corresponds to one bit in the bitmap. When a value of a bit corresponding to the RBG is 0, it indicates that the RBG is unavailable. When a value of a bit corresponding to the RBG is 1, it indicates that the RBG is available. The RBG is formed by a plurality of consecutive resource blocks (resource block, RB). A quantity of RBs included in a nominal RBG is determined by a higher-layer parameter rbg-Size (indicating Configuration 1 or Configuration 2) configured in PUSCH-config and a BWP size with reference to the following Table 2:

**Table 2**

| Bandwidth Part Size (BWP size) | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

It should be noted that, in an uplink BWP, a quantity of RBs in RBGs at two ends of the BWP may be less than a quantity of RBs in a nominal RBG, and a quantity of RBs in another RBG in the BWP is equal to the quantity of RBs in the nominal RBG.

### 4.2. Frequency domain resource allocation type1 and type2 for an uplink channel

In the Type1, frequency domain resources in any length are allocated to one terminal side device starting a bandwidth part (bandwidth part, BWP) from any RB, and are indicated by using a resource indication value (resource indication value, RIV). There are two modes: an interleaved mode and a non-interleaved mode.

In the Type2, frequency domain resources in any unit are allocated to one terminal side device in a unit of M RBs starting the BWP from any RB, and are indicated by using a resource indication value (resource indication value, RIV). There are two modes: an interleaved mode and a non-interleaved mode.

### 5. Frequency Hopping Transmission

Frequency hopping transmission means that a terminal device may perform transmission at different moments by using frequency domain resources with different frequencies.

For example, the terminal device performs transmission by using a first group of K RBs in a first slot, and performs transmission by using another group of K RBs in a second slot.

### 6. Frequency Domain Resource Allocation for a Physical Uplink Control Channel (physical uplink control channel, PUCCH)

Frequency domain resources allocated to the PUCCH are consecutive RBs. Periodic PUCCH resources are indicated by higher-layer signaling. Semi-persistent PUCCH resources or PUCCH resources corresponding to a dynamic downlink scheduling may be jointly indicated by the higher-layer signaling and physical layer signaling.

### 7. Frequency Domain Resource Allocation for a Demodulation Reference Signal (demodulation reference signal, DM-RS)

The DM-RS is usually sent together with uplink data transmission or uplink control transmission. For example, the DM-RS of the PUSCH is sent together with the PUSCH; and the DM-RS of the PUCCH is sent together with the PUCCH.

In a frequency domain, the DM-RS corresponding to the PUSCH and the PUSCH are transmitted on a same RB.

In a time domain, if a transform precoding mode is used, the DM-RS corresponding to the PUSCH and the PUSCH may be sent on a same symbol. If a non-transform precoding mode is used, the DM-RS corresponding to the PUSCH and the PUSCH may be sent on different symbols.

Manners of sending the DM-RS corresponding to the PUCCH and the PUCCH in a time domain and a frequency domain are the same as manners of sending the DM-RS corresponding to the PUSCH and the PUSCH in a time domain and a frequency domain. Details are not described in this application again.

### 8. Subcarrier

A subcarrier is a minimum frequency domain resource unit. In an NR, a subcarrier spacing may be 15 kHz, 30 kHz, 60 kHz, 120 kHz, or 240 kHz.

The foregoing briefly describes some concepts involved in embodiments of this application.

Currently, there is a case in which a transmit power of the terminal device is adjusted to be close to a maximum transmit power but still cannot meet an uplink transmission requirement of the terminal device. In this case, uplink transmission performance of the network device is affected, and an insufficient transmit power of the terminal device causes an insufficient transmit power of the DM-RS. This affects the channel estimation quality of the network device, reduces demodulation performance of the network device, and further reduces uplink transmission performance of the terminal device.

In addition, in a PUSCH whose configuration is allowed, a TBS configured by the network device for the terminal device is configured by the network device by using a higher layer, or is indicated by using activation DCI. If the TBS configured by the network device is relatively large, and an amount of uplink data transmitted by the terminal device is relatively small, the terminal device needs to pad vacant bits in a transmission resource by using a relatively large quantity of padding bits. As a result, there are a relatively large quantity of padding bits in the uplink transmission, and uplink transmission performance of the terminal device is affected. In addition, the terminal device needs to allocate a transmit power to a subcarrier carrying a padding bit. Consequently, power consumption of the terminal device is reduced, and a probability that the transmit power of the terminal device is insufficient is increased.

To reduce impact of an insufficient transmission rate of a terminal on uplink transmission performance of the terminal, and resolve a problem such as transmission performance deterioration caused by a relatively large TBS, embodiments of this application provide a communication method. When a network device configures a first frequency domain resource for a terminal device to perform uplink transmission, the terminal device performs condition determining. When the power headroom of the terminal device is less than the first threshold, or the ratio of the amount of the uplink data to be sent by the terminal device to the TBS configured by the network device for the current uplink transmission is less than the second threshold, the terminal device selects the second frequency domain resource with fewer subcarriers to perform the uplink transmission.

In this way, in a scenario in which the power headroom of the terminal device is insufficient, the terminal device performs the uplink transmission on a second frequency domain resource with fewer subcarriers. Because a quantity of the subcarriers in the second frequency domain resource is smaller, when a total transmit power of the terminal device remains unchanged, a transmit power allocated to each subcarrier is increased, thereby improving a transmission effect on each subcarrier, and further improving transmission performance of uplink transmission of the terminal device.

In a scenario in which the amount of the uplink data to be sent by the terminal device is insufficient, the terminal device performs the uplink transmission on a second frequency domain resource with fewer subcarriers. Because a quantity of the subcarriers in the second frequency domain resource is smaller, the terminal device may perform the uplink transmission at a smaller total transmit power while keeping sending power on each subcarrier unchanged, thereby reducing power consumption of the terminal device. In addition, the terminal device performs the uplink transmission based on the second frequency domain resource, so that a TBS size can be reduced, and then a quantity of padding bits that need to be padded with vacant bits is further reduced, thereby improving uplink transmission efficiency.

As shown in FIG. 2, the communication method provided in embodiments of this application includes the following steps.

S201: A network device sends first indication information to a terminal device. Correspondingly, the terminal device receives the first indication information from the network device.

The first indication information indicates a first frequency domain resource to be used by the terminal device for uplink transmission.

Specifically, when the terminal device needs to perform uplink transmission, the network device configures a corresponding frequency domain resource and a corresponding time domain resource for the terminal device, and the terminal device performs the uplink transmission on the frequency domain resource and the time domain resource.

For example, the network device configures a first time domain resource and a first frequency domain resource for the terminal device, and the terminal device performs the uplink transmission on the first time domain resource and the first frequency domain resource.

The uplink transmission recorded in embodiments of this application includes at least one of uplink data transmission and uplink control transmission. This is not limited in this application.

For example, when the uplink transmission is uplink data transmission, the uplink transmission may be PUSCH transmission. When the uplink transmission is uplink control transmission, the uplink transmission may be PUCCH transmission.

S202: When a first preset condition is met, the terminal device performs uplink transmission based on a second frequency domain resource.

A quantity of subcarriers of the second frequency domain resource is less than a quantity of subcarriers of the first frequency domain resource, and a first preset condition includes at least one of the following: a power headroom PH of the terminal device is less than a first threshold, and a ratio of an amount of uplink data to be sent by the terminal device to a TBS configured by the network device for the uplink transmission is less than a second threshold.

It should be noted that the uplink data to be sent by the terminal device may be MAC layer data.

An amount of the uplink data to be sent by the terminal device is an amount of data that needs to be sent by the terminal device when the terminal device performs the uplink transmission this time. For example, an amount of first data that the terminal device needs to send to the network device is X, and the terminal device determines to send the first data through two times of uplink transmission. An amount of uplink data sent for the first time is Y, an amount of uplink data sent for the second time is Z, and X=Y+Z.

In this case, an amount of uplink data to be sent by the terminal device for the first time is X, and an amount of uplink data to be sent by the terminal device for the second time is Z. In a possible implementation, a time domain resource corresponding to the second frequency domain resource is the same as a time domain resource corresponding to the first frequency domain resource. For example, both the second frequency domain resource and the first frequency domain resource correspond to a first time domain resource.

Based on the foregoing technical solution, when the network device configures the first frequency domain resource for the terminal device to perform the uplink transmission, the terminal device performs condition determining. When the power headroom of the terminal device is less than the first threshold, or the ratio of the amount of the uplink data to be sent by the terminal device to the TBS configured by the network device for the current uplink transmission is less than the second threshold, the terminal device selects the second frequency domain resource with fewer subcarriers to perform the uplink transmission.

In this way, in a scenario in which the power headroom of the terminal device is insufficient, the terminal device performs the uplink transmission on a second frequency domain resource with fewer subcarriers. Because a quantity of the subcarriers in the second frequency domain resource is smaller, when a total transmit power of the terminal device remains unchanged, a transmit power allocated to each subcarrier is increased, thereby improving a transmission effect on each subcarrier, and further improving transmission performance of uplink transmission of the terminal device.

In a scenario in which the amount of the uplink data to be sent by the terminal device is insufficient, the terminal device performs the uplink transmission on a second frequency domain resource with fewer subcarriers. Because a quantity of the subcarriers in the second frequency domain resource is smaller, the terminal device may perform the uplink transmission at a smaller total transmit power while keeping sending power on each subcarrier unchanged, thereby reducing power consumption of the terminal device. In addition, the terminal device performs the uplink transmission based on the second frequency domain resource, so that a TBS size can be reduced, and then a quantity of padding bits that need to be padded with vacant bits is further reduced, thereby improving uplink transmission efficiency.

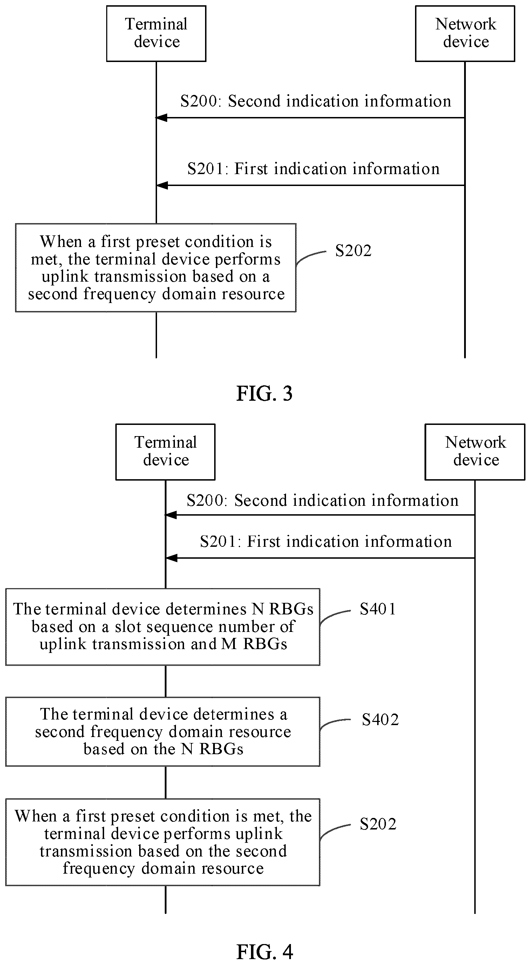

With reference to FIG. 2, as shown in FIG. 3, and before S201, the method further includes the following steps.

S200: A network device sends second indication information to a terminal device. Correspondingly, the terminal device receives the second indication information from the network device.

The second indication information indicates a transmission mode of the terminal device, and the transmission mode includes: performing, by the terminal device, uplink transmission based on the second frequency domain resource when a first preset condition is met.

The second indication information is carried in at least one of the following: higher-layer signaling sent by the network device to the terminal device, a MAC-CE sent by the network device to the terminal device, and DCI sent by the network device to the terminal device.

In a specific implementation, for different uplink transmission, the second indication information may be carried in different signaling messages. The following provides descriptions by scenario.

### Scenario a

If the uplink transmission of the terminal device is any one of the following: dynamically scheduled uplink data transmission, uplink control channel transmission corresponding to dynamically scheduled downlink shared channel transmission, uplink control channel transmission corresponding to a CSI-RS, or aperiodic SRS transmission, the second indication information is carried in higher-layer signaling sent by the network device to the terminal device, or the second indication information is carried in DCI sent by the network device to the terminal device.

Specifically, in dynamically scheduled uplink transmission, the network device needs to send DCI to the terminal device, to indicate a scheduled transmission resource. Therefore, the network device may carry the second indication information by using the DCI, and the terminal device performs the uplink transmission based on the second frequency domain resource when the first preset condition is met. In this case, the network device sends the second indication information by using the DCI. In this way, real-time performance of sending the second indication information by the network device can be improved.

Alternatively, the network device may configure the second indication information for the terminal device by using higher-layer signaling. The network device configures the second indication information for the terminal device by using the higher-layer signaling. The terminal device may determine, within a continuous period of time based on the second indication information, to perform the transmission mode recorded in the communication method provided in embodiments of this application. Therefore, signaling overheads between the network device and the terminal device are reduced.

It should be noted that the foregoing dynamically scheduled uplink data transmission may be dynamically scheduled PUSCH transmission; the uplink control channel transmission corresponding to the dynamically scheduled downlink shared channel transmission may be a PUCCH corresponding to the dynamically scheduled PDSCH; and the uplink control channel transmission corresponding to the CSI-RS may be a PUCCH corresponding to the CSI-RS.

### Scenario b

If the uplink transmission of the terminal device is any one of the following: uplink data channel transmission with a configured grant Typel, periodic uplink control channel transmission, or periodic SRS transmission, the second indication information is carried in higher-layer signaling sent by the network device to the terminal device.

Specifically, in the uplink transmission with a configured grant Type1, the network device only needs to configure a long-time available uplink transmission resource for the terminal device by using higher-layer signaling, and within a valid time of the uplink transmission resource, the network device does not need to send additional indication information to the terminal device to indicate the uplink transmission resource. Therefore, the network device carries the second indication information by using the higher-layer signaling. The terminal device may determine, within a continuous period of time based on the second indication information, to perform the transmission mode recorded in the communication method provided in embodiments of this application. Therefore, signaling overheads between the network device and the terminal device are reduced.

It should be noted that the uplink data channel transmission with a configured grant Type1 may be a PUSCH with a configured grant Type1; and the periodic uplink control channel transmission may be a periodic PUCCH.

### Scenario c

If uplink sending information of the terminal device is any one of the following: uplink data channel transmission with a configured grant Type2, uplink control channel transmission carrying semi-persistent channel state information CSI, or uplink data channel transmission carrying semi-persistent CSI, the second indication information is carried in higher-layer signaling sent by the network device to the terminal device, or the second indication information is carried in activation DCI, where the DCI is used to activate an uplink data channel transmission resource with a configured grant Type2, or the DCI is used to activate an uplink control channel transmission resource carrying semi-persistent CSI, or the DCI is used to activate an uplink data channel transmission resource carrying semi-persistent CSI.

Specifically, in the uplink transmission with a configured grant Type2, after the network device configures a long-time available uplink transmission resource for the terminal device by using the higher-layer signaling, the network device needs to send activation DCI to activate the uplink transmission resource. Therefore, the network device may carry the second indication information by using the DCI. After receiving the second indication information carried by the activation DCI, the terminal device performs the uplink transmission based on the second frequency domain resource when the first preset condition is met. In this case, the network device sends the second indication information by using the activation DCI. In this way, real-time performance of sending the second indication information by the network device can be improved.

Alternatively, the network device may configure the second indication information for the terminal device by using higher-layer signaling. The network device configures the second indication information for the terminal device by using the higher-layer signaling. The terminal device may determine, within a continuous period of time based on the second indication information, to perform the transmission mode recorded in the communication method provided in embodiments of this application. Therefore, signaling overheads between the network device and the terminal device are reduced.

It should be noted that the uplink data channel transmission with a configured grant Type2 may be a PUSCH with a configured grant Type2; the uplink control channel transmission carrying semi-persistent CSI may be a PUCCH carrying semi-persistent CSI; and the uplink data channel transmission carrying semi-persistent CSI may be a PUSCH carrying semi-persistent CSI.

Based on this, the terminal device determines, based on the second indication information of the network device, whether to use the transmission mode in the communication method recorded in this application. When the network device indicates the terminal device to use the transmission mode recorded in this application, the terminal device performs the uplink transmission based on the second frequency domain resource when a first preset condition is met. When the network device does not indicate the terminal device to use the transmission mode recorded in this application, the terminal device still performs the uplink transmission by using the first frequency domain resource.

In addition, the network device may send the second indication information to the terminal device in a plurality of manners, thereby increasing an applicable scenario of embodiments of this application. For example, the network device may flexibly select a signaling message that carries the second indication information, and when the network device carries the second indication information by using higher-layer signaling, physical layer signaling overheads can be reduced. When the network device uses the MAC-CE or the DCI to carry the second indication information, the network device may flexibly control the transmission mode of the terminal device. For example, the transmission mode recorded in this application is disabled in a timely manner based on load, so that blind detection of uplink transmission parameters can be avoided.

In a possible implementation, it can be learned from S202 that the first preset condition includes the following two cases: Case 1: A power headroom PH of the terminal device is less than a first threshold; and Case 2: A ratio of an amount of uplink data to be sent by the terminal device to a TBS configured by the network device for the uplink transmission is less than a second threshold.

The Case 1 and the Case 2 are described in detail below respectively.

Case 1: A power headroom PH of the terminal device is less than a first threshold.

The first threshold may be preset in a protocol, or the first threshold may be configured by the network device for the terminal device by using higher-layer signaling or physical layer signaling.

It should be noted that, that the power headroom of the terminal device is less than the first threshold indicates that a transmit power at which the terminal device currently performs uplink transmission is close to a maximum transmit power of the terminal device. In this case, when the terminal device performs the uplink transmission, there is a relatively high probability that there is a problem of insufficient power. In this case, the terminal device sends the uplink data by using the second frequency domain resource, so that a transmit power on each subcarrier in an uplink transmission process can be increased, and uplink transmission quality of the terminal device can be improved.

In an example, the first threshold of the PH is 0 dB, or the first threshold of the PH is -1 dB, or the first threshold of the PH is -3 dB.

In this case, the value of the first threshold may be determined according to at least one of the following:
a channel type used for the uplink transmission or a signal type used for the uplink transmission (denoted as a scenario a);
a scheduling type used for the uplink transmission (denoted as a scenario b);
a resource identifier used for the uplink data transmission in at least two uplink data transmission resources configured when the uplink transmission is uplink data transmission (denoted as a scenario c); and
a resource identifier used for the uplink control transmission in at least two uplink control transmission resources configured when the uplink transmission is uplink control transmission (denoted as a scenario d).

The following respectively describes in detail the scenario a, the scenario b, the scenario c, and the scenario d.

Scenario a: The first threshold is determined based on a channel type used for the uplink transmission or a signal type used for the uplink transmission.

In an example, the channel type used for the uplink transmission includes a PUSCH, a PUCCH, and a physical random access channel (Physical Random Access Channel, PRACH). The channel type used for the uplink transmission includes an SRS.

With reference to the foregoing example, the terminal device determines that a first threshold corresponding to PUSCH transmission is 0 dB, a first threshold corresponding to PUCCH transmission is -3 dB, and a first threshold corresponding to PRACH transmission is -1 dB.

Scenario b: The first threshold is determined based on a scheduling type used for the uplink transmission.

In an example, the scheduling type used for the uplink transmission includes: dynamically scheduled PUSCH transmission, PUSCH transmission corresponding to a configured grant type1, and PUSCH transmission corresponding to a configured grant type2.

With reference to the foregoing example, the terminal device determines that a first threshold corresponding to the dynamically scheduled PUSCH transmission is 0 dB, a first threshold corresponding to the PUSCH transmission corresponding to the configured grant type1 is -1 dB, and a first threshold corresponding to the PUSCH transmission corresponding to the configured grant type2 is -3 dB.

Scenario c: When the uplink transmission is uplink data transmission, the first threshold is determined based on a resource identifier used for the uplink data transmission in the at least two uplink data transmission resources configured.

For example, the network device configures two uplink data transmission resources for the terminal device: an uplink data transmission resource #1 and an uplink data transmission resource #2.

The terminal device determines that a first threshold corresponding to the uplink data transmission resource #1 is 0 dB, and the terminal device determines that a first threshold corresponding to the uplink data transmission resource #2 is -1 dB.

Scenario d: Determine the first threshold according to a resource identifier used for the uplink control transmission in at least two uplink control transmission resources configured when the uplink transmission is uplink control transmission.

For example, the network device configures two uplink control transmission resources for the terminal device: an uplink control transmission resource #1 and an uplink control transmission resource #2.

The terminal device determines that a first threshold corresponding to the uplink control transmission resource #1 is 0 dB, and the terminal device determines that a first threshold corresponding to the uplink control transmission resource #2 is -1 dB.

Case 2: A ratio of an amount of uplink data to be sent by the terminal device to a TBS configured by the network device for the uplink transmission is less than a second threshold.

In an example, the second threshold is 0.5, or the second threshold is 0.25. The second threshold may be preset in a protocol, or the second threshold may be configured by the network device for the terminal device by using higher-layer signaling or physical layer signaling.

In this case, it indicates that the terminal device configures a relatively large quantity of TBSs for the network device, and an amount of uplink data of the terminal device is relatively small. In this case, the uplink transmission quality of the terminal device may be improved by reducing frequency domain resources for the uplink transmission of the terminal device.

In a possible implementation, with reference to the foregoing Case 1 and Case 2, on a basis of including the conditions recorded in the Case 1 or the Case 2, the first preset condition may further include the following condition:

The uplink transmission performed by the terminal device is uplink data channel initial transmission.

In other words, when the terminal device meets either of the conditions recorded in the Case 1 or the Case 2, if the terminal device performs the uplink data channel initial transmission, the terminal device performs the uplink transmission by using the second frequency domain resource. If the terminal device does not perform the uplink data channel initial transmission, the terminal device performs the uplink transmission by using the first frequency domain resource.

Based on the foregoing technical solution, the terminal device may determine, based on the foregoing Case 1 and Case 2, whether the first preset condition is met.

In a possible implementation, the network device may preconfigure a corresponding first frequency domain resource and a corresponding second frequency domain resource for the terminal device. The network device indicates the terminal device to perform uplink transmission by using the first frequency domain resource. The terminal determines whether a first preset condition is met currently, and when the first preset condition is met, the terminal device performs the uplink transmission based on the second frequency domain resource configured by the network device for the terminal device.

In still another possible implementation, the network device preconfigures the first frequency domain resource for the terminal device, and indicates the terminal device to perform the uplink transmission by using the first frequency domain resource. The terminal determines whether a first preset condition is met currently; and when the first preset condition is met, the terminal device adjusts the first frequency domain resource to determine a second frequency domain resource, and the terminal device performs the uplink transmission on the second frequency domain resource.

In embodiments of this application, there are the following three scenarios in which the terminal device adjusts the first frequency domain resource to determine the second frequency domain resource: Scenario 1: The terminal device adjusts a bandwidth of the first frequency domain resource to determine the second frequency domain resource. Scenario 2: The terminal device adjusts a subcarrier spacing of the first frequency domain resource to determine the second frequency domain resource. Scenario 3: The terminal device separately adjusts a bandwidth of the first frequency domain resource and a subcarrier spacing of the first frequency domain resource to determine the second frequency domain resource.

The following respectively describes in detail the scenario 1, the scenario 2, and the scenario 3.

Scenario 1: The terminal device adjusts a bandwidth of the first frequency domain resource to determine the second frequency domain resource.

In the scenario 1, a subcarrier spacing of the first frequency domain resource is equal to a subcarrier spacing of the second frequency domain resource, and a bandwidth of the second frequency domain resource is less than the bandwidth of the first frequency domain resource.

In a possible implementation, the bandwidth of the first frequency domain resource is T times the bandwidth of the second frequency domain resource.

A value of T is a preset value, or a value of T is carried in at least one of the following: higher-layer signaling sent by the network device to the terminal device, a MAC-CE sent by the network device to the terminal device, and DCI sent by the network device to the terminal device.

It should be noted that T is a positive integer, and the bandwidth of the first frequency domain resource is T times the bandwidth of the second frequency domain resource. This indicates that the bandwidth of the first frequency domain resource is T times the bandwidth of the second frequency domain resource, or the bandwidth of the first frequency domain resource is approximately T times the bandwidth of the second frequency domain resource. For example, the bandwidth of the first frequency domain resource is 20 MHz, and the bandwidth of the second frequency domain resource is 10 MHz. In this case, the bandwidth of the first frequency domain resource is twice the bandwidth of the second frequency domain resource. In another example, the bandwidth of the first frequency domain resource is 20 MHz, and the bandwidth of the second frequency domain resource is 5 MHz. In this case, the bandwidth of the first frequency domain resource is four times the bandwidth of the second frequency domain resource.

The value of T may be determined based on an indication of the network device, or may be determined based on a value of the PH. For example, T is preset in a protocol to have two values: 2 and 4.

When the value of T is determined based on the indication of the network device, the network device may indicate a specific value of T by using DCI sent to the terminal device.

For example, the network device sends DCI to the terminal device, where the DCI indicates that the value of T is 2; or the network device sends DCI to the terminal device, where the DCI indicates that the value of T is 4.

When the value of T is determined based on the value of the PH, the terminal device is preconfigured with one or more PH thresholds, and each PH threshold is corresponding to one value of T.

For example, the terminal device is preconfigured with two PH thresholds: a first PH threshold and a second PH threshold. When the value of the PH is greater than the second PH threshold and less than or equal to the first PH threshold, the terminal device determines that the value of T is 2. When the value of the PH is less than or equal to the second PH threshold, the terminal device determines that the value of T is 4.

In an example, the first PH threshold is 0 dB, and the second PH threshold is -3 dB.

In the scenario 1, a granularity of the second frequency domain resource is less than a granularity of the first frequency domain resource. The granularity of the second frequency domain resource may be an RBG or a PRG. Specifically, for example, in a scenario 1.1, a quantity of RBGs in the first frequency domain resource is greater than a quantity of RBGs in the second frequency domain resource; or in a scenario 1.2, a quantity of PRGs in the first frequency domain resource is greater than a quantity of PRGs in the second frequency domain resource.

The following describes the scenario 1.1 and the scenario 1.2 in detail.

Scenario 1.1: A quantity of RBGs in the first frequency domain resource is greater than a quantity of RBGs in the second frequency domain resource.

In a possible implementation, the second frequency domain resource includes N RBGs, the N RBGs are N RBGs among M RBGs in the first frequency domain resource, both M and N are positive integers, and a value of N is a value determined by rounding down a ratio of M to T, or a value of N is a value determined by rounding up a ratio of M to T.

Specifically, the terminal device determines the M RBGs in the first frequency domain resource, and selects the N RBGs from the first frequency domain resource according to a preset rule. The terminal device determines that the selected N RBGs are the second frequency domain resources.

The preset rule may include the following preset rule 1, preset rule 2, and preset rule 3, which are respectively described in detail below.

Preset rule 1: The N RBGs are N RBGs with highest frequencies in the M RBGs.

According to the preset rule 1, the terminal device may select, from the M RBGs in the first frequency domain resource, N RBGs with highest frequencies as the second frequency domain resources.

For example, the first frequency domain resource includes 10 RBGs: an RBG#0, an RBG#1, an RBG#2, an RBG#3, an RBG#4, an RBG#5, an RBG#6, an RBG#7, an RBG#8 and an RBG#9. Frequencies of the RBG#0 to the RBG#9 increase successively.

The terminal device determines that the value of T is 4. The value of N is a value determined by rounding up a ratio of M to T. In other words, the value of N is 10 divided by 4 and rounded up, and the value of N is 3.

In this case, three RBGs with highest frequencies determined by the terminal device from the 10 RBGs included in the first frequency domain resource are an RBG#9, an RBG#8, and an RBG#7.

Preset rule 2: The N RBGs are N RBGs with lowest frequencies in the M RBGs.

According to the preset rule 2, the terminal device selects, from the M RBGs in the first frequency domain resource, N RBGs with lowest frequencies as the second frequency domain resources.

With reference to the example in the preset rule 1, three RBGs with lowest frequencies determined by the terminal device from the 10 RBGs included in the first frequency domain resource are an RBG#0, an RBG#1, and an RBG#2.

Preset rule 3: The N RBGs are N RBGs whose corresponding RBG sequence numbers P satisfy MOD(P, T)=S in the M RBGs, where MOD is a modulo operation, P is a non-negative integer, S is a non-negative integer, and S is less than T.

When the value of T is 4 and the value of S is 0, with reference to the example in the preset rule 1, three RBGs determined by the terminal device from the 10 RBGs included in the first frequency domain resource are an RBG#8, an RBG#4, and an RBG#0.

Alternatively, when the value of T is 4 and the value of S is 1, with reference to the example in the preset rule 1, three RBGs determined by the terminal device from the 10 RBGs included in the first frequency domain resource are an RBG#9, an RBG#5, and an RBG#1.

Alternatively, when the value of T is 4 and the value of S is 2, with reference to the example in the preset rule 1, two RBGs determined by the terminal device from the 10 RBGs included in the first frequency domain resource are an RBG#6, and an RBG#2.

Alternatively, when the value of T is 4 and the value of S is 3, with reference to the example in the preset rule 1, two RBGs determined by the terminal device from the 10 RBGs included in the first frequency domain resource are an RBG#7, and an RBG#3.

In a possible implementation, with reference to FIG. 3, as shown in FIG. 4, and before S202, the method further includes the following steps:
S401: The terminal device determines N RBGs based on a slot sequence number of uplink transmission and M RBGs.

For example, a transmission resource configured by a network device for a terminal includes a first frequency domain resource on a frequency domain resource, and includes a first time domain resource on a time domain resource.

After the terminal device adjusts the first frequency domain resource to determine a second frequency domain resource, the second frequency domain resource and the first time domain resource jointly constitute a transmission resource for the uplink transmission of the terminal device.

If the first time domain resource includes 10 slots, the terminal device respectively performs the uplink transmission in the second frequency domain resource on the 10 slots.

In this case, the terminal device may select different N RBGs as the second frequency domain resources in different slots.

For example, the terminal device may select, from the M RBGs in a slot whose slot sequence number is an odd number, N RBGs with highest frequencies as the second frequency domain resources.

The terminal device may select, from the M RBGs in a slot whose slot sequence number is an even number, N RBGs with lowest frequencies as the second frequency domain resources.

Alternatively, the terminal device may select N RBGs as the second frequency domain resources in each slot based on MOD(P, T)=S, where values of S in different slots are different. For example, in a slot whose slot sequence number is an odd number, the terminal device determines that the value of S is 1, and in a slot whose slot sequence number is an even number, the terminal device determines that the value of S is 0.

S402: The terminal device determines a second frequency domain resource based on the N RBGs.

Based on the foregoing technical solution, in different slots configured by the network device for the terminal device, the terminal device may select different N RBGs for the terminal device by using different methods, so that the terminal device can perform frequency hopping transmission between the different slots, and obtain a frequency domain diversity gain.

For example, the terminal device selects an RBG with a lowest frequency in a slot whose slot sequence number is an odd number, and the terminal device selects an RBG with a highest frequency in a slot whose slot sequence number is an even number. In this way, when the terminal device performs the uplink transmission in the different slots, the frequency hopping transmission can be performed between the different slots.

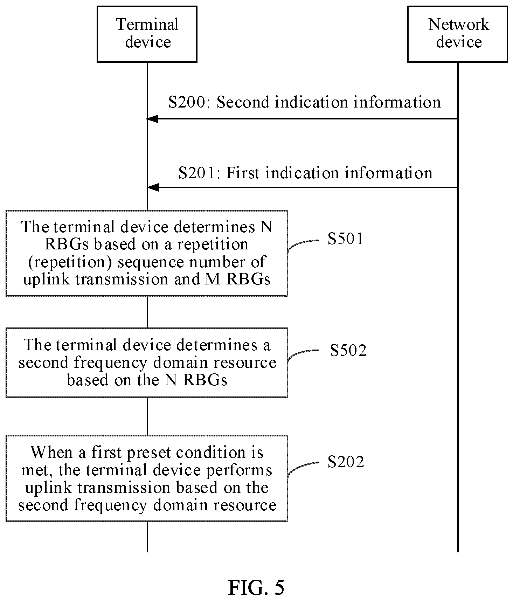

In another possible implementation, with reference to FIG. 3, as shown in FIG. 5, and before S202, the method further includes the following steps:
S501: The terminal device determines N RBGs based on a repetition (repetition) sequence number of uplink transmission and M RBGs.

It should be noted that for a specific implementation of S501, reference may be made to S401. In an actual implementation process, only a corresponding slot sequence number needs to be replaced with a repetition (repetition) sequence number. Details are not described in this application again.

S502: The terminal device determines a second frequency domain resource based on the N RBGs.

Based on the foregoing technical solution, when the terminal device performs repetition (repetition), the terminal device may select N different RBGs for the terminal device in different repetitions by using different methods. The terminal device may perform frequency hopping transmission in the different repetitions.

For example, when a repetition sequence number is an odd number, the terminal device selects an RBG with a lowest sequence number frequency, and when a repetition sequence number is an even number, the terminal device selects an RBG with a highest sequence number frequency. The terminal device may perform frequency hopping transmission in the different repetitions.

Scenario 1.2: A quantity of PRGs in the first frequency domain resource is greater than a quantity of PRGs in the second frequency domain resource.

In a possible implementation, the second frequency domain resource includes L PRGs, the L PRGs are L PRGs among K PRGs in the first frequency domain resource, both K and L are positive integers, and a value of L is a value determined by rounding down a ratio of K to T, or a value of L is a value determined by rounding up a ratio ofK to T.

Specifically, the terminal device determines the K PRGs in the first frequency domain resource, and selects the L PRGs from the first frequency domain resource according to a preset rule. The terminal device determines that the selected L PRGs are the second frequency domain resources.

The preset rule may include the following preset rule 4, preset rule 5, and preset rule 6, which are respectively described in detail below.

Preset rule 4: The L PRGs are L PRGs with highest frequencies in the K PRGs.

According to the preset rule 4, the terminal device may select, from the K PRGs in the first frequency domain resource, L PRGs with highest frequencies as the second frequency domain resources.

For example, the first frequency domain resource includes 10 PRGs: a PRG#0, a PRG#1, a PRG#2, a PRG#3, a PRG#4, a PRG#5, a PRG#6, a PRG#7, a PRG#8, and a PRG#9. Frequencies of the PRG#0 to the PRG#9 increase successively.

The terminal device determines that the value of T is 4. The value of L is a value determined by rounding up a ratio of K to T. In other words, the value of L is 10 divided by 4 and rounded up, and the value of L is 3.

In this case, three PRGs with highest frequencies determined by the terminal device from the 10 PRGs included in the first frequency domain resource are a PRG#9, a PRG#8, and a PRG#7.

Preset rule 5: The L PRGs are L PRGs with lowest frequencies in the K PRGs.

According to the preset rule 5, the terminal device selects, from the K PRGs in the first frequency domain resource, L PRGs with lowest frequencies as the second frequency domain resources.

With reference to the example in the preset rule 4, three PRGs with lowest frequencies determined by the terminal device from the 10 PRGs included in the first frequency domain resource are a PRG#0, a PRG#1, and a PRG#2.

Preset rule 6: The L PRGs are L PRGs whose corresponding PRG sequence numbers P satisfy MOD(P, T)=S in the K PRGs, where MOD is a modulo operation, P is a non-negative integer, S is a non-negative integer, and S is less than T.

When the value of T is 4 and the value of S is 0, with reference to the example in the preset rule 4, three PRGs determined by the terminal device from the 10 PRGs included in the first frequency domain resource are a PRG#8, a PRG#4, and a PRG#0.

Alternatively, when the value of T is 4 and the value of S is 1, with reference to the example in the preset rule 4, three PRGs determined by the terminal device from the 10 PRGs included in the first frequency domain resource are a PRG#9, a PRG#5, and a PRG#1.

Alternatively, when the value of T is 4 and the value of S is 2, with reference to the example in the preset rule 4, two PRGs determined by the terminal device from the 10 PRGs included in the first frequency domain resource are a PRG#6 and a PRG#2.

Alternatively, when the value of T is 4 and the value of S is 3, with reference to the example in the preset rule 4, two PRGs determined by the terminal device from the 10 PRGs included in the first frequency domain resource are a PRG#7 and a PRG#3.

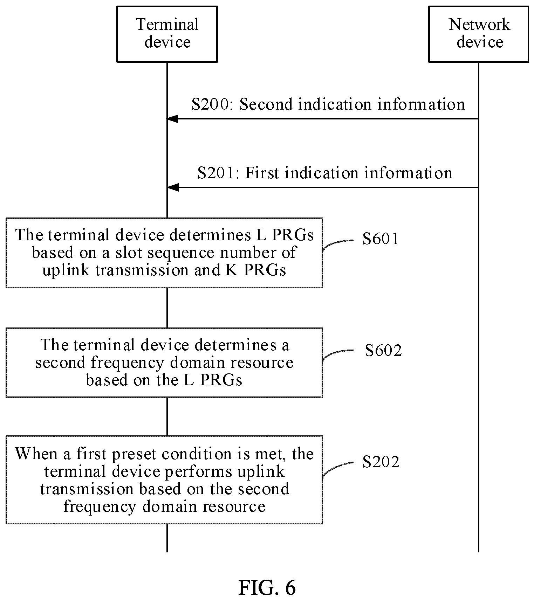

In a possible implementation, with reference to FIG. 3, as shown in FIG. 6, and before S202, the method further includes the following steps:
S601: The terminal device determines L PRGs based on a slot sequence number of uplink transmission and K PRGs.

For example, a transmission resource configured by a network device for a terminal includes a first frequency domain resource on a frequency domain resource, and includes a first time domain resource on a time domain resource.

After the terminal device adjusts the first frequency domain resource to determine a second frequency domain resource, the second frequency domain resource and the first time domain resource jointly constitute a transmission resource for the uplink transmission of the terminal device.

If the first time domain resource includes 10 slots, the terminal device respectively performs the uplink transmission in the second frequency domain resource on the 10 slots.

In this case, the terminal device may select different L PRGs as the second frequency domain resources in different slots.

For example, the terminal device may select, from the K PRGs in a slot whose slot sequence number is an odd number, L PRGs with highest frequencies as the second frequency domain resources.

The terminal device may select, from the K PRGs in a slot whose slot sequence number is an even number, L PRGs with lowest frequencies as the second frequency domain resources.

Alternatively, the terminal device may select L RBGs as the second frequency domain resources in each slot based on MOD(P, T)=S, where values of S in different slots are different. For example, in a slot whose slot sequence number is an odd number, the terminal device determines that the value of S is 1, and in a slot whose slot sequence number is an even number, the terminal device determines that the value of S is 0.

S602: The terminal device determines a second frequency domain resource based on the L PRGs.

Based on the foregoing technical solution, in different slots configured by the network device for the terminal device, the terminal device may select different L PRGs for the terminal device by using different methods, so that the terminal device can perform frequency hopping transmission between the different slots.

For example, the terminal device selects a PRG with a lowest frequency in a slot whose slot sequence number is an odd number, and the terminal device selects a PRG with a highest frequency in a slot whose slot sequence number is an even number. In this way, when performing uplink transmission in different slots, the terminal device may perform frequency hopping transmission between the different slots.

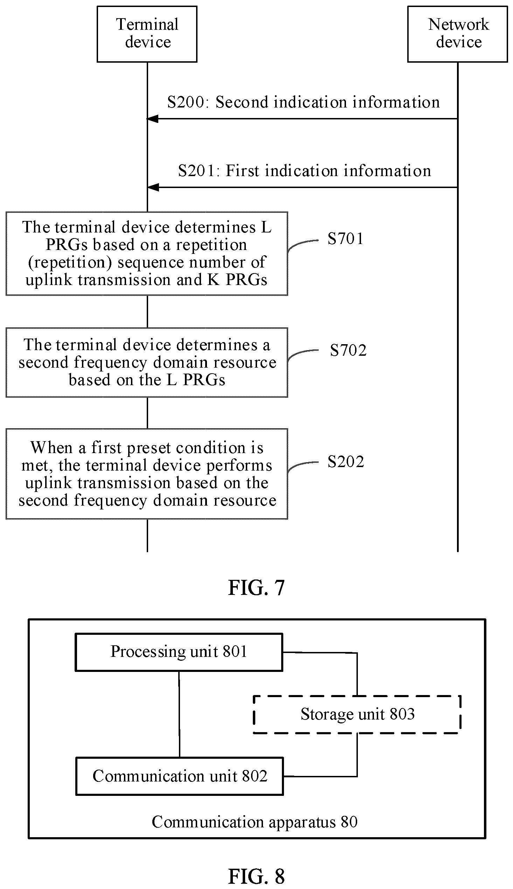

In another possible implementation, with reference to FIG. 3, as shown in FIG. 7, and before S202, the method further includes the following steps.

S701: The terminal device determines L PRGs based on a repetition (repetition) sequence number of uplink transmission and K PRGs.

It should be noted that for a specific implementation of S701, reference may be made to S601. In an actual implementation process, only a corresponding slot sequence number needs to be replaced with a repetition (repetition) sequence number. Details are not described in this application again.

S702: The terminal device determines a second frequency domain resource based on the L PRGs.

Based on the foregoing technical solution, when the terminal device performs repetition (repetition), the terminal device may select L different RBGs for the terminal device in different repetitions by using different methods. The terminal device may perform frequency hopping transmission in the different repetitions.

For example, when the repetition sequence number is an odd number, the terminal device selects a PRG with a lowest frequency, and when the repetition sequence number is an even number, the terminal device selects a PRG with a highest frequency. The terminal device may perform frequency hopping transmission in the different repetitions.

Scenario 2: The terminal device adjusts a subcarrier spacing of the first frequency domain resource to determine the second frequency domain resource.

In the scenario 2, a bandwidth of the first frequency domain resource is equal to a bandwidth of the second frequency domain resource, and the subcarrier spacing of the first frequency domain resource is less than a subcarrier spacing of the second frequency domain resource.

The subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

In a possible implementation, the subcarrier spacing of the first frequency domain resource is T times the subcarrier spacing of the second frequency domain resource.

A value of T is a preset value, or a value of T is carried in at least one of the following: higher-layer signaling sent by the network device to the terminal device, a MAC-CE sent by the network device to the terminal device, and DCI sent by the network device to the terminal device.

It should be noted that T is a positive integer, the subcarrier spacing of the second frequency domain resource is T times the subcarrier spacing of the first frequency domain resource, a value of T is 2 to the n^{th} power, and n is a positive integer. For example, when n is equal to 1, the value of T is 2, and when n is equal to 2, the value of T is 4.

For example, the subcarrier spacing of the first frequency domain resource is 15 Hz, and the subcarrier spacing of the second frequency domain resource is 30 kHz. In this case, the subcarrier spacing of the second frequency domain resource is twice the subcarrier spacing of the first frequency domain resource. In another example, the subcarrier spacing of the first frequency domain resource is 15 kHz, and the subcarrier spacing of the second frequency domain resource is 60 kHz. In this case, the subcarrier spacing of the second frequency domain resource is four times the subcarrier spacing of the first frequency domain resource.

The value of T may be determined based on an indication of the network device, or may be determined based on a value of the PH. For example, T is preset in a protocol to have two values: 2 and 4.

When the value of T is determined based on the indication of the network device, the network device may indicate a specific value of T by using DCI sent to the terminal device.

For example, the network device sends DCI to the terminal device, where the DCI indicates that the value of T is 2; or the network device sends DCI to the terminal device, where the DCI indicates that the value of T is 4.

When the value of T is determined based on the value of the PH, the terminal device is preconfigured with one or more PH thresholds, and each PH threshold is corresponding to one value of T.

For example, the terminal device is preconfigured with two PH thresholds: a third PH threshold and a fourth PH threshold. When the value of the PH is greater than the fourth PH threshold and less than or equal to the third PH threshold, the terminal device determines that the value of T is 2. When the value of the PH is less than or equal to the fourth PH threshold, the terminal device determines that the value of T is 4.

Based on the foregoing technical solution, the terminal device may determine the second frequency domain resource by increasing the subcarrier spacing of the first frequency domain resource.

Scenario 3: The terminal device adjusts a subcarrier spacing and a bandwidth of the first frequency domain resource to determine the second frequency domain resource.

In the scenario 3, the bandwidth of the first frequency domain resource is greater than a bandwidth of the second frequency domain resource, and the subcarrier spacing of the first frequency domain resource is less than a subcarrier spacing of the second frequency domain resource.

For a specific implementation of the scenario 3, reference may be made to the implementations recorded in the scenario 1 and the scenario 2. Details are not described in this application again.

The solutions in the foregoing embodiments of this application may be combined on a premise that the solutions are not contradictory.

The foregoing mainly describes the solutions in embodiments of this application from a perspective of interaction between network elements. It may be understood that, to implement the foregoing functions, the network elements such as the network device and the terminal device include at least one of corresponding hardware structures and software modules for performing the functions. A person skilled in the art should be easily aware that units, algorithms, and steps in the examples described with reference to the embodiments disclosed in this specification can be implemented in a form of hardware or a combination of hardware and computer software in this application. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the network device and the terminal device may be divided into function units based on the method examples. For example, each function unit may be obtained through division based on each corresponding function, or two or more functions may be integrated into one processing unit. The integrated unit may be implemented in a form of hardware, or may be implemented in a form of a software function unit. It should be noted that, in embodiments of this application, division into the units is an example, and is merely logical function division. During actual implementation, another division manner may be used.

When an integrated unit is used, FIG. 8 is a schematic diagram of a possible structure of a communication apparatus (denoted as a communication apparatus 80) involved in the foregoing embodiments. The communication apparatus 80 includes a processing unit 801 and a communication unit 802, and may further include a storage unit 803. The schematic diagram of the structure shown in FIG. 8 may be used to show structures of the network device and the terminal device involved in the foregoing embodiments.

When the schematic diagram of the structure shown in FIG. 8 is used to show the structure of the terminal device involved in the foregoing embodiment, the processing unit 801 is configured to control and manage actions of the terminal device, for example, control the terminal device to perform S201 and S202 in FIG. 2, S200, S201, and S202 in FIG. 3, S200, S201, S202, S401, and S402 in FIG. 4, S200, S201, S202, S501, and S502 in FIG. 5, S200, S201, S202, S601, and S602 in FIG. 6, S200, S201, S202, S701, and S702 in FIG. 7, and/or actions performed by the terminal device in another process described in embodiments of this application. The processing unit 801 may communicate with another network entity by using the communication unit 802, for example, communicate with the network device shown in FIG. 1. The storage unit 803 is configured to store program code and data of the terminal device.

When the schematic diagram of the structure shown in FIG. 8 is used to show the structure of the terminal device involved in the foregoing embodiments, the communication apparatus 80 may be a terminal device, or may be a chip in a terminal device.

When the schematic diagram of the structure shown in FIG. 8 is used to show the structure of the network device involved in the foregoing embodiments, the processing unit 801 is configured to control and manage actions of the network device, for example, control the network device to perform S201 in FIG. 2, S200 and S201 in FIG. 3, S200 and S201 in FIG. 4, S200 and S201 in FIG. 5, S200 and S201 in FIG. 6, S200 and S201 in FIG. 7, and/or actions performed by the terminal device in another process described in embodiments of this application. The processing unit 801 may communicate with another network entity by using the communication unit 802, for example, communicate with the network device shown in FIG. 1. The storage unit 803 is configured to store program code and data of the terminal device.

When the schematic diagram of the structure shown in FIG. 8 is used to show the structure of the network device involved in the foregoing embodiments, the communication apparatus 80 may be a network device, or may be a chip in a network device.

When the communication apparatus 80 is a terminal device or a network device, the processing unit 801 may be a processor or a controller, and the communication unit 802 may be a communication interface, a transceiver, a transceiver device, a transceiver circuit, a transceiver apparatus, or the like. The communication interface is a general term, and may include one or more interfaces. The storage unit 803 may be a memory. When the communication apparatus 80 is a chip in a terminal device or a network device, the processing unit 801 may be a processor or a controller, and the communication unit 802 may be an input interface and/or an output interface, a pin, a circuit, or the like. The storage unit 803 may be a storage unit (for example, a register or a cache) in the chip, or may be a storage unit (for example, a read-only memory (read-only memory, ROM for short) or a random access memory (random access memory, RAM for short)) that is in the terminal device or the network device and that is located outside the chip.

The communication unit may also be referred to as a transceiver unit. An antenna and a control circuit that have receiving and sending functions in the communication apparatus 80 may be considered as the communication unit 802 of the communication apparatus 80, and a processor that has a processing function may be considered as the processing unit 801 of the communication apparatus 80. Optionally, a component configured to implement a receiving function in the communication unit 802 may be considered as a receiving unit. The receiving unit is configured to perform a receiving step in embodiments of this application. The receiving unit may be a receiving device, a receiver, a receiver circuit, or the like.

When the integrated unit in FIG. 8 is implemented in a form of a software function module and sold or used as an independent product, the integrated unit may be stored in a computer-readable storage medium. Based on such an understanding, the technical solutions of embodiments of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The storage medium for storing the computer software product includes: any medium that can store program code, such as a USB flash drive, a removable hard disk, a read-only memory, a random access memory, a magnetic disk, or an optical disc.

The unit in FIG. 8 may also be referred to as a module. For example, the processing unit may be referred to as a processing module.

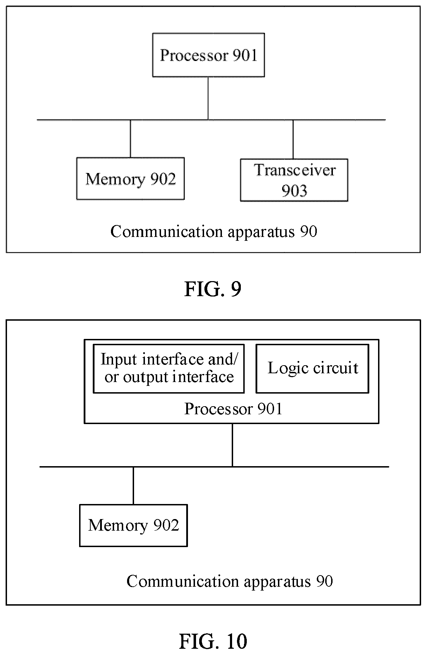

An embodiment of this application further provides a schematic diagram of a hardware structure of a communication apparatus (denoted as a communication apparatus 90). Refer to FIG. 9 or FIG. 10, the communication apparatus 90 includes a processor 901. Optionally, the communication apparatus 90 further includes a memory 902 connected to the processor 901.

In a first possible implementation, refer to FIG. 9, the communication apparatus 90 further includes a transceiver 903. The processor 901, the memory 902, and the transceiver 903 are connected through a bus. The transceiver 903 is configured to communicate with another device or a communication network. Optionally, the transceiver 903 may include a transmitting device and a receiving device. A component configured to implement a receiving function in the transceiver 903 may be considered as a receiving device. The receiving device is configured to perform a receiving step in embodiments of this application. A component configured to implement a sending function in the transceiver 903 may be considered as a transmitting device. The transmitting device is configured to perform a sending step in embodiments of this application.

Based on a first possible implementation, the schematic diagram of the structure shown in FIG. 9 may be used to show the structure of the network device or the terminal device involved in the foregoing embodiments.

When the schematic diagram of the structure shown in FIG. 9 is used to show the structure of the terminal device involved in the foregoing embodiments, the processor 901 is configured to control and manage actions of the terminal device. For example, the processor 901 is configured to support the terminal device to perform S201 and S202 in FIG. 2, S200, S201, and S202 in FIG. 3, S200, S201, S202, S401, and S402 in FIG. 4, S200, S201, S202, S501, and S502 in FIG. 5, S200, S201, S202, S601, and S602 in FIG. 6, S200, S201, S202, S701, and S702 in FIG. 7, and/or actions performed by the terminal device in another process described in embodiments of this application. The processor 901 may communicate with another network entity by using the transceiver 903, for example, communicate with the network device shown in FIG. 1. The memory 902 is configured to store program code and data of the terminal device.

When the schematic diagram of the structure shown in FIG. 9 is used to show the structure of the network device involved in the foregoing embodiments, the processor 901 is configured to control and manage actions of the network device. For example, the processor 901 is configured to support the network device to perform S201 in FIG. 2, S200 and S201 in FIG. 3, S200 and S201 in FIG. 4, S200 and S201 in FIG. 5, S200 and S201 in FIG. 6, S200 and S201 in FIG. 7, and/or actions performed by the network device in another process described in embodiments of this application. The processor 901 may communicate with another network entity by using the transceiver 903, for example, communicate with the terminal device shown in FIG. 1. The memory 902 is configured to store program code and data of the network device.

In a second possible implementation, the processor 901 includes a logic circuit and at least one of an input interface and an output interface. The output interface is configured to perform a sending action in a corresponding method, and the input interface is configured to perform a receiving action in the corresponding method.

Based on a second possible implementation, the schematic diagram of the structure shown in FIG. 10 may be used to show the structure of the network device or the terminal device involved in the foregoing embodiments.

When the schematic diagram of the structure shown in FIG. 10 is used to show the structure of the terminal device involved in the foregoing embodiments, the processor 901 is configured to control and manage actions of the terminal device. For example, the processor 901 is configured to support the terminal device to perform S201 and S202 in FIG. 2, S200, S201, and S202 in FIG. 3, S200, S201, S202, S401, and S402 in FIG. 4, S200, S201, S202, S501, and S502 in FIG. 5, S200, S201, S202, S601, and S602 in FIG. 6, S200, S201, S202, S701, and S702 in FIG. 7, and/or actions performed by the terminal device in another process described in embodiments of this application. The processor 901 may communicate with another network entity by using at least one of the input interface and the output interface, for example, communicate with the network device shown in FIG. 1. The memory 902 is configured to store program code and data of the terminal device.

When the schematic diagram of the structure shown in FIG. 10 is used to show the structure of the network device involved in the foregoing embodiments, the processor 901 is configured to control and manage actions of the network device. For example, the processor 901 is configured to support the network device to perform S201 in FIG. 2, S200 and S201 in FIG. 3, S200 and S201 in FIG. 4, S200 and S201 in FIG. 5, S200 and S201 in FIG. 6, S200 and S201 in FIG. 7, and/or actions performed by the network device in another process described in embodiments of this application. The processor 901 may communicate with another network entity by using at least one of the input interface and the output interface, for example, communicate with the terminal device shown in FIG. 1. The memory 902 is configured to store program code and data of the network device.

FIG. 9 and FIG. 10 may alternatively show a system chip in the network device. In this case, the actions performed by the network device may be implemented by the system chip. For a specific action performed, reference may be made to the foregoing descriptions. Details are not described herein again. FIG. 9 and FIG. 10 may alternatively show a system chip in the terminal device. In this case, the actions performed by the terminal device may be implemented by the system chip. For a specific action performed, reference may be made to the foregoing descriptions. Details are not described herein again.

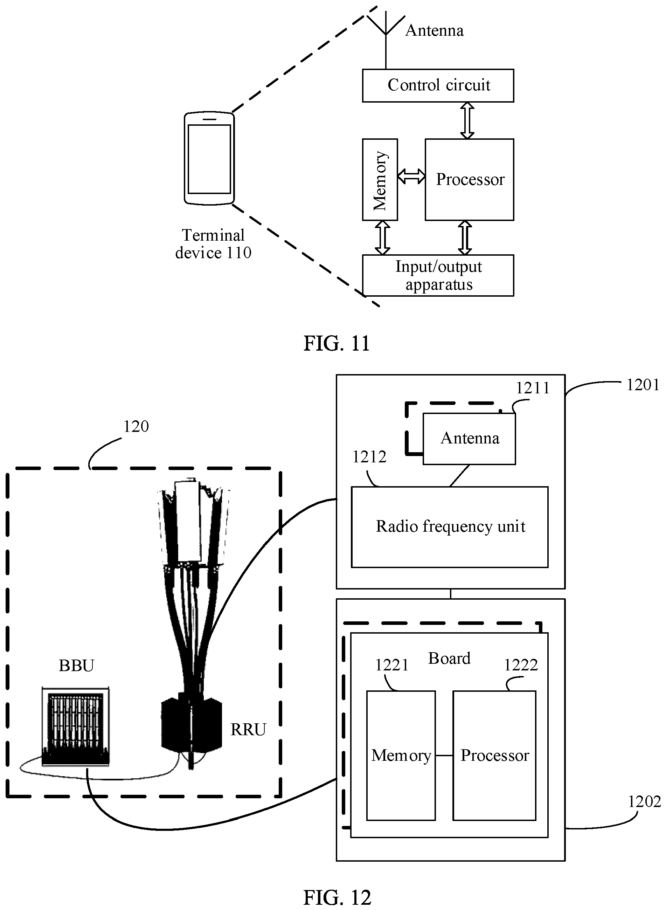

In addition, an embodiment of this application further provides schematic diagrams of hardware structures of a terminal device (denoted as a terminal device 110) and a network device (denoted as a network device 120). For details, reference may be made to FIG. 11 and FIG. 12 respectively.

FIG. 11 is a schematic diagram of a hardware structure of a terminal device 110. For ease of description, FIG. 11 shows only main components of the terminal device. As shown in FIG. 11, the terminal device 110 includes a processor, a memory, a control circuit, an antenna, and an input/output apparatus.

The processor is mainly configured to process a communication protocol and communication data, control the entire terminal device, execute a software program, and process data of the software program, for example, control the terminal device to perform S201 and S202 in FIG. 2, S200, S201, and S202 in FIG. 3, S200, S201, S202, S401, and S402 in FIG. 4, S200, S201, S202, S501, and S502 in FIG. 5, S200, S201, S202, S601, and S602 in FIG. 6, S200, S201, S202, S701, and S702 in FIG. 7, and/or actions performed by the terminal device in another process described in embodiments of this application. The memory is mainly configured to store a software program and data. The control circuit (which may also be referred to as a radio frequency circuit) is mainly configured to perform conversion between a baseband signal and a radio frequency signal, and process the radio frequency signal. A combination of the control circuit and the antenna may also be referred to as a transceiver, mainly configured to send/receive a radio frequency signal in an electromagnetic wave form. The input/output apparatus, for example, a touchscreen, a display, or a keyboard, is mainly configured to receive data entered by a user and output data to the user.

After the terminal device is powered on, the processor may read the software program in the memory, interpret and execute instructions of the software program, and process the data of the software program. When the processor needs to send data through the antenna, after performing baseband processing on the to-be-sent data, the processor outputs a baseband signal to a control circuit in the control circuit. The control circuit performs radio frequency processing on the baseband signal and then sends a radio frequency signal to the outside in the form of the electromagnetic wave through the antenna. When data is sent to the terminal device, the control circuit receives a radio frequency signal through the antenna, converts the radio frequency signal into a baseband signal, and outputs the baseband signal to the processor. The processor converts the baseband signal into data, and processes the data.

A person skilled in the art may understand that for ease of description, FIG. 11 shows only one memory and one processor. In an actual terminal device, there may be a plurality of processors and a plurality of memories. The memory may also be referred to as a storage medium, a storage device, or the like. This is not limited in embodiments of this application.

In an optional implementation, the processor may include a baseband processor and a central processing unit. The baseband processor is mainly configured to process a communication protocol and communication data. The central processing unit is mainly configured to control the entire terminal device, execute software program, and process data of the software program. The processor in FIG. 11 is integrated with functions of the baseband processor and the central processing unit. A person skilled in the art may understand that, the baseband processor and the central processing unit may be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program. The processor executes the software program to implement a baseband processing function.

FIG. 12 is a schematic diagram of a hardware structure of a network device 120. The network device 120 may include one or more radio frequency units, such as a remote radio unit (remote radio unit, RRU for short) 1201 and one or more baseband units (baseband units, BBUs for short) (which may also be referred to as digital units (digital units, DUs for short)) 1202.

The RRU 1201 may be referred to as a transceiver unit, a transceiver device, a transceiver circuit, a transceiver, or the like, and may include at least one antenna 1211 and a radio frequency unit 1212. The RRU 1201 is mainly configured to send and receive a radio frequency signal and perform conversion between a radio frequency signal and a baseband signal. The RRU 1201 and the BBU 1202 may be physically disposed together, or may be physically disposed separately, for example, a distributed base station.

The BBU 1202 is a control center of the network device, may also be referred to as a processing unit, and is mainly configured to complete baseband processing functions such as channel coding, multiplexing, modulation, and spectrum spreading.

In an embodiment, the BBU 1202 may include one or more boards. A plurality of boards may jointly support a radio access network (such as an LTE network) of a single access standard, or may respectively support radio access networks (such as an LTE network, a 5G network, or another network) of different access standards. The BBU 1202 further includes a memory 1221 and a processor 1222. The memory 1221 is configured to store necessary instructions and data. The processor 1222 is configured to control the network device to perform a necessary action. The memory 1221 and the processor 1222 may serve one or more boards. In other words, a memory and a processor may be deployed on each board. Alternatively, a plurality of boards may share a same memory and a same processor. In addition, a necessary circuit may be further disposed on each board.

It should be understood that the network device 120 shown in FIG. 12 can perform S201 in FIG. 2, S200 and S201 in FIG. 3, S200 and S201 in FIG. 4, S200 and S201 in FIG. 5, S200 and S201 in FIG. 6, S200 and S201 in FIG. 7, and/or actions performed by the network device in another process described in embodiments of this application. Operations, functions, or operations and functions of modules in the network device 120 are separately set to implement corresponding procedures in the foregoing method embodiments. For details, reference may be made to the descriptions in the foregoing method embodiments. To avoid repetition, detailed descriptions are properly omitted herein.

In an implementation process, the steps in the method provided in this embodiment may be completed by using a hardware integrated logic circuit in the processor, or by using instructions in a form of software. The steps of the method disclosed with reference to embodiments of this application may be directly performed by a hardware processor, or may be performed by a combination of hardware and software modules in the processor.

The processor in this application may include but is not limited to at least one of the following computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores configured to execute software instructions to perform an operation or processing. The processor may be an independent semiconductor chip, or may be integrated with another circuit into a semiconductor chip. For example, the processor may form a SoC (a system-on-a-chip) with another circuit (such as a code circuit, a hardware acceleration circuit, or various buses and interface circuits). Alternatively, the processor may be integrated into an ASIC as a built-in processor of the ASIC, and the ASIC integrated with the processor may be separately packaged, or may be packaged with another circuit. In addition to the core configured to execute software instructions to perform an operation or processing, the processor may further include a necessary hardware accelerator, for example, a field programmable gate array (field programmable gate array, FPGA), a PLD (a programmable logic device), or a logic circuit that implements a dedicated logic operation.

The memory in embodiments of this application may include at least one of the following types: a read-only memory (read-only memory, ROM) or another type of static storage device that can store static information and instructions, a random access memory (random access memory, RAM) or another type of dynamic storage device that can store information and instructions, or may be an electrically erasable programmable read-only memory (Electrically erasable programmable read-only memory, EEPROM). In some scenarios, the memory may alternatively be a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed to a computer. However, the memory is not limited thereto.

An embodiment of this application further provides a computer-readable storage medium, including instructions, and when the instructions are run on a computer, the computer is enabled to perform any one of the foregoing methods.

An embodiment of this application further provides a computer program product including instructions. When the computer program product runs on a computer, the computer is enabled to perform any one of the foregoing methods.

An embodiment of this application further provides a communication system, including the foregoing network device and the foregoing terminal device.

An embodiment of this application further provides a chip. The chip includes a processor and an interface circuit. The interface circuit is coupled to the processor. The processor is configured to run computer programs or instructions, to implement the foregoing method. The interface circuit is used to communicate with another module outside the chip.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the processes or functions according to embodiments of this application are produced. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD for short)), or the like.

Although this application is described with reference to all the embodiments herein, in a process of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of multiple. A single processor or another unit may implement several functions enumerated in the claims. Some measures are set forth in dependent claims that are different from each other, but this does not mean that these measures cannot be combined to produce a great effect.

Although this application is described with reference to specific features and embodiments thereof, it is clear that various modifications and combinations may be made to them without departing from the spirit and scope of this application. Correspondingly, this specification and the accompanying drawings are merely example description of this application defined by the appended claims, and are considered as any or all of modifications, variations, combinations or equivalents that cover the scope of this application. It is clearly that a person skilled in the art can make various modifications and variations to this application without departing from the spirit and scope of this application. In this case, if the modifications and variations made to this application fall within the scope of the claims of this application and their equivalent technologies, this application is intended to include these modifications and variations.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, first indication information from a network device, wherein the first indication information indicates a first frequency domain resource to be used by the terminal device for uplink transmission; and
performing, by the terminal device, the uplink transmission based on a second frequency domain resource when a first preset condition is met, wherein a quantity of subcarriers of the second frequency domain resource is less than a quantity of subcarriers of the first frequency domain resource, and the first preset condition comprises at least one of the following: a power headroom PH of the terminal device is less than a first threshold, and a ratio of an amount of uplink data to be sent by the terminal device to a transport block size TBS configured by the network device for the uplink transmission is less than a second threshold.

2. The method according to claim 1, wherein a value of the first threshold is determined according to at least one of the following:
a channel type used for the uplink transmission or a signal type used for the uplink transmission;
a scheduling type used for the uplink transmission;
a resource identifier used for the uplink data transmission in at least two uplink data transmission resources configured when the uplink transmission is uplink data transmission; and
a resource identifier used for the uplink control transmission in at least two uplink control transmission resources configured when the uplink transmission is uplink control transmission.

3. The method according to claim 1 or 2, wherein a bandwidth of the second frequency domain resource is less than a bandwidth of the first frequency domain resource.

4. The method according to claim 3, wherein the bandwidth of the first frequency domain resource is T times the bandwidth of the second frequency domain resource, and a value of T is a preset value, or a value of T is carried in at least one of the following: higher-layer signaling sent by the network device to the terminal device, a media access control control element MAC-CE sent by the network device to the terminal device, and downlink control information DCI sent by the network device to the terminal device.

5. The method according to any one of claims 1 to 4, wherein the second frequency domain resource comprises N resource block groups RBGs, the N RBGs are N RBGs among M RBGs in the first frequency domain resource, both M and N are positive integers, and a value of N is a value determined by rounding down a ratio of M to T, or a value of N is a value determined by rounding up a ratio of M to T.

6. The method according to claim 5, wherein the N RBGs are N RBGs with highest frequencies in the M RBGs; or
the N RBGs are N RBGs with lowest frequencies in the M RBGs; or
the N RBGs are N RBGs whose corresponding RBG sequence numbers P satisfy MOD(P, T)=S in the M RBGs, wherein MOD is a modulo operation, P is a non-negative integer, S is a non-negative integer, and S is less than T.

7. The method according to claim 6, further comprising:
determining, by the terminal device, the N RBGs based on a slot sequence number of the uplink transmission and the M RBGs.

8. The method according to claim 6, further comprising:
determining, by the terminal device, the N RBGs based on a repetition repetition sequence number of the uplink transmission and the M RBGs.

9. The method according to any one of claims 1 to 4, wherein the second frequency domain resource comprises L physical resource block groups PRGs, the L PRGs are L PRGs among K PRGs in the first frequency domain resource, both L and K are positive integers, and a value of L is a value determined by rounding down a ratio of K to T, or a value of L is a value determined by rounding up a ratio of K to T.

10. The method according to claim 9, wherein the L PRGs are L PRGs with highest frequencies in the K PRGs; or
the L PRGs are L PRGs with lowest frequencies in the K PRGs; or
the L PRGs are L PRGs whose corresponding PRG sequence numbers Q satisfy MOD(Q, T)=S in the K PRGs, wherein MOD is a modulo operation, Q is a non-negative integer, S is a non-negative integer, and S is less than T.

11. The method according to claim 10, further comprising:
determining, by the terminal device, the L PRGs based on a slot sequence number of the uplink transmission and the K PRGs.

12. The method according to claim 10, further comprising:
determining, by the terminal device, the L PRGs based on a repetition repetition sequence number of the uplink transmission and the K PRGs.

13. The method according to claim 1 or 2, wherein a subcarrier spacing of the second frequency domain resource is greater than a subcarrier spacing of the first frequency domain resource.

14. The method according to claim 13, wherein the subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

15. The method according to any one of claims 4 to 12 and claim 14, wherein the value of T is determined based on a value of the PH.

16. The method according to any one of claims 1 to 15, wherein the performing, by the terminal device, the uplink transmission based on a second frequency domain resource comprises:
receiving, by the terminal device, second indication information from the network device, wherein the second indication information indicates a transmission mode of the terminal device, and the transmission mode comprises: performing, by the terminal device, the uplink transmission based on the second frequency domain resource when the first preset condition is met.

17. A communication apparatus, comprising a communication unit and a processing unit, wherein
the communication unit is configured to receive first indication information from a network device, wherein the first indication information indicates a first frequency domain resource to be used by a terminal device for uplink transmission; and
the processing unit is configured to indicate the communication unit to perform the uplink transmission based on a second frequency domain resource when a first preset condition is met, wherein a quantity of subcarriers of the second frequency domain resource is less than a quantity of subcarriers of the first frequency domain resource, and the first preset condition comprises at least one of the following: a power headroom PH of the terminal device is less than a first threshold, and a ratio of an amount of uplink data to be sent by the terminal device to a transport block size TBS configured by the network device for the uplink transmission is less than a second threshold.

18. The apparatus according to claim 17, wherein a value of the first threshold is determined according to at least one of the following:
a channel type used for the uplink transmission or a signal type used for the uplink transmission;
a scheduling type used for the uplink transmission;
a resource identifier used for the uplink data transmission in at least two uplink data transmission resources configured when the uplink transmission is uplink data transmission; and
a resource identifier used for the uplink control transmission in at least two uplink control transmission resources configured when the uplink transmission is uplink control transmission.

19. The apparatus according to claim 17 or 18, wherein a bandwidth of the second frequency domain resource is less than a bandwidth of the first frequency domain resource.

20. The apparatus according to claim 19, wherein the bandwidth of the first frequency domain resource is T times the bandwidth of the second frequency domain resource, and a value of T is a preset value, or a value of T is carried in at least one of the following: higher-layer signaling sent by the network device to the terminal device, a media access control control element MAC-CE sent by the network device to the terminal device, and downlink control information DCI sent by the network device to the terminal device.

21. The apparatus according to any one of claims 17 to 20, wherein the second frequency domain resource comprises N resource block groups RBGs, the N RBGs are N RBGs among M RBGs in the first frequency domain resource, both M and N are positive integers, and a value of N is a value determined by rounding down a ratio of M to T, or a value of N is a value determined by rounding up a ratio of M to T.

22. The apparatus according to claim 21, wherein the N RBGs are N RBGs with highest frequencies in the M RBGs; or
the N RBGs are N RBGs with lowest frequencies in the M RBGs; or
the N RBGs are N RBGs whose corresponding RBG sequence numbers P satisfy MOD(P, T)=S in the M RBGs, wherein MOD is a modulo operation, P is a non-negative integer, S is a non-negative integer, and S is less than T.

23. The apparatus according to claim 22, wherein the processing unit is further configured to:
determine the N RBGs based on a slot sequence number of the uplink transmission and the M RBGs.

24. The apparatus according to claim 22, wherein the processing unit is further configured to:
determine the N RBGs based on a repetition repetition sequence number of the uplink transmission and the M RBGs.

25. The apparatus according to any one of claims 17 to 20, wherein the second frequency domain resource comprises L physical resource block groups PRGs, the L PRGs are L PRGs among K PRGs in the first frequency domain resource, both L and K are positive integers, and a value of L is a value determined by rounding down a ratio of K to T, or a value of L is a value determined by rounding up a ratio of K to T.

26. The apparatus according to claim 25, wherein the L PRGs are L PRGs with highest frequencies in the K PRGs; or
the L PRGs are L PRGs with lowest frequencies in the K PRGs; or
the L PRGs are L PRGs whose corresponding PRG sequence numbers Q satisfy MOD(Q, T)=S in the K PRGs, wherein MOD is a modulo operation, Q is a non-negative integer, S is a non-negative integer, and S is less than T.

27. The apparatus according to claim 26, wherein the processing unit is further configured to:
determine the L PRGs based on a slot sequence number of the uplink transmission and the K PRGs.

28. The apparatus according to claim 26, wherein the processing unit is further configured to:
determine the L PRGs based on a repetition repetition sequence number of the uplink transmission and the K PRGs.

29. The apparatus according to claim 17 or 18, wherein a subcarrier spacing of the second frequency domain resource is greater than a subcarrier spacing of the first frequency domain resource.

30. The apparatus according to claim 29, wherein the subcarrier spacing of the second frequency domain resource is T times the subcarrier spacing of the first frequency domain resource, and a value of T is a preset value, or a value of T is carried in at least one of the following: higher-layer signaling sent by the network device to the terminal device, a MAC-CE sent by the network device to the terminal device, and DCI sent by the network device to the terminal device.

31. The apparatus according to any one of claims 20 to 29 and claim 30, wherein the value of T is determined based on a value of the PH.

32. The apparatus according to any one of claims 17 to 31, wherein the communication unit is further configured to:
receiving second indication information from the network device, wherein the second indication information indicates a transmission mode of the terminal device, and the transmission mode comprises: performing, by the terminal device, the uplink transmission based on the second frequency domain resource when a first preset condition is met.

33. A communication apparatus, comprising at least one processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 16 by using a logic circuit or executing a code instruction.

34. A computer-readable storage medium, comprising a computer program or instructions, wherein when the computer program or the instructions are run on a computer, the computer is enabled to perform the method according to any one of claims 1 to 16.

35. A computer program product, comprising a computer program or instructions, wherein when the computer program or the instructions are run on a computer, the computer is enabled to perform the method according to any one of claims 1 to 16.
